# EUROPEAN PATENT APPLICATION

(11) **EP 4 632 343 A1**
(43) Date of publication of application: **15.10.2025**
(21) Application number: 23900466.6
(22) Date of filing: 22.11.2023
(51) Int. Cl.: G01L 5/00, B60K 1/04, B60L 3/00, B62D 25/20, G01L 1/20

(54) **ROAD SURFACE INTERFERENCE SENSOR, MONITORING SYSTEM**

(30) Priority: 09.12.2022 JP 2022197108; 09.05.2023 JP 2023077316; 25.10.2023 JP 2023183516
(71) Applicant: DENSO CORPORATION, Kariya-city, Aichi 448-8661 (JP)
(72) Inventor: ITO, Daiki, Kariya-city, Aichi 4488661 (JP); YOSHIDA, Shuntaro, Kariya-city, Aichi 4488661 (JP); MATSUMOTO, Yuki, Kariya-city, Aichi 4488661 (JP); KITAURA, Yasuhiro, Kariya-city, Aichi 4488661 (JP)
(74) Representative: Kuhnen & Wacker Patent- und Rechtsanwaltsbüro PartG mbB
(86) International application number: PCT/JP2023/042028
(87) International publication number: WO 2024/122347

(57) **Abstract**

A road surface interference sensor (10) includes a detection unit (21) that is located below a floor panel (FP) of a vehicle (V) and detects an external force applied to the vehicle from a side of a road surface (RS). The detection unit includes a hollow insulator (22) and a plurality of electrode lines (23, 24, 26, and 27) located on an inner surface (22a) of the insulator, and detects the external force based on presence or absence of contact between the electrode lines.

## Description

### CROSS REFERENCE TO RELATED APPLICATION

The present application is based on Japanese Patent Applications No. 2022-197108 filed on December 09, 2022, No. 2023-077316 filed on May 09, 2023, and No. 2023-183516 filed on October 25, 2023. The entire disclosures of all of the above applications are incorporated herein by reference.

### TECHNICAL FIELD

The present disclosure relates to a road surface interference sensor and a monitoring system.

### BACKGROUND ART

Conventionally, as a collision sensor installed inside a vehicle bumper, there has been known a sensor including a flexibly deformable hollow tube and a pressure sensor that detects a pressure change of air inside the tube (for example, refer to Patent Literature 1).

### RELATED ART LITERATURE

### PATENT LITERATURE

Patent Literature 1: JP2014-505629A

### SUMMARY OF INVENTION

The present inventors have studied installing the impact sensor described in Patent Literature 1 below a floor panel of a vehicle to detect road surface interference of the vehicle, and found that if deformation of the tube is localized, the pressure change of air is small, and it is difficult to obtain sufficient detection performance.

An object of the present disclosure is to provide a road surface interference sensor and a monitoring system capable of appropriately detecting road surface interference.

According to an aspect of the present disclosure, a road surface interference sensor comprises: a detection unit located below a floor panel of a vehicle and configured to detect an external force applied to the vehicle from a side of a road surface. The detection unit includes a hollow insulator and a plurality of electrode lines provided to an inner surface of the insulator. The detection unit is configured to detect the external force based on presence or absence of contact between the electrode lines.

As described in Patent Literature 1, when detecting, as an external force, the pressure change of air inside the tube due to the deformation of the tube, if the deformation of the tube is localized, the pressure change of air is small, and it is difficult to appropriately detect the impact.

On the other hand, when detecting the external force based on presence or absence of contact between a plurality of electrode lines due to deformation of an insulator, even if the deformation of the insulator is localized, the external force applied to the vehicle from a road surface side can be appropriately detected by a short circuit caused by the contact between the plurality of electrode lines.

Reference numeral in parentheses attached to each component or the like indicates an example of a correspondence relationship between the component or the like and a specific component or the like described in the following embodiment.

### BRIEF DESCRIPTION OF DRAWINGS

FIG. 1 is a schematic diagram of a vehicle to which a road surface interference sensor of the present disclosure is applied.
FIG. 2 is a schematic perspective view of a battery pack.
FIG. 3 is a schematic top view illustrating an inside of the battery pack.
FIG. 4 is a diagram illustrating road surface interference.
FIG. 5 is a schematic configuration diagram of a road surface interference sensor according to a first technical idea.
FIG. 6 is a diagram illustrating a detection unit of a pressure sensor.
FIG. 7 is a schematic cross-sectional view of the detection unit.
FIG. 8 is a schematic cross-sectional view illustrating an underfloor structure below a floor panel.
FIG. 9 is a diagram illustrating the detection unit of the pressure sensor during the road surface interference.
FIG. 10 is a diagram illustrating a series connection body of the detection unit.
FIG. 11 is a diagram illustrating an output of the series connection body of the detection unit.
FIG. 12 is a flowchart illustrating an outline of control processing executed by a sensor control unit.
FIG. 13 is a schematic cross-sectional view of a detection unit serving as a reference example.
FIG. 14 is a cross-sectional view taken along a line XIV-XIV in FIG. 13.
FIG. 15 is a diagram illustrating an internal state when the detection unit of the reference example is bent.
FIG. 16 is a diagram illustrating characteristics of the detection unit of the reference example.
FIG. 17 is a diagram illustrating an internal state when a detection unit of an embodiment is bent.
FIG. 18 is a diagram illustrating characteristics of the detection unit of the embodiment.
FIG. 19 is a schematic cross-sectional view illustrating another example of the detection unit.
FIG. 20 is a schematic configuration diagram illustrating a first modification of the road surface interference sensor according to the first technical idea.
FIG. 21 is a schematic configuration diagram illustrating a second modification of the road surface interference sensor according to the first technical idea.
FIG. 22 is a schematic configuration diagram illustrating a third modification of the road surface interference sensor according to the first technical idea.
FIG. 23 is a schematic configuration diagram illustrating a fourth modification of the road surface interference sensor according to the first technical idea.
FIG. 24 is a schematic cross-sectional view of a detection unit according to a fifth modification.
FIG. 25 is a schematic diagram illustrating a schematic configuration of a pressure sensor according to the fifth modification.
FIG. 26 is a diagram illustrating a state of the detection unit when an external force is applied on a protector portion.
FIG. 27 is a schematic diagram illustrating a schematic configuration of a pressure sensor according to a sixth modification.
FIG. 28 is a diagram illustrating a state of the detection unit when the external force is applied on the protector portion.
FIG. 29 is a schematic configuration diagram of a road surface interference sensor according to a second technical idea.
FIG. 30 is a diagram illustrating an impact sensor.
FIG. 31 is a schematic cross-sectional view illustrating an underfloor structure below a floor panel.
FIG. 32 is a diagram illustrating a first pressure sensor.
FIG. 33 is a schematic cross-sectional view illustrating an inside of a tube.
FIG. 34 is a flowchart illustrating an outline of control processing executed by a sensor control unit.
FIG. 35 is a schematic cross-sectional view illustrating another example of the impact sensor.
FIG. 36 is a schematic cross-sectional view illustrating an example of a hydraulic pressure sensor.
FIG. 37 is a schematic cross-sectional view illustrating the inside of the tube.
FIG. 38 is a schematic configuration diagram illustrating a first modification of the road surface interference sensor according to the second technical idea.
FIG. 39 is a schematic configuration diagram illustrating a second modification of the road surface interference sensor according to the second technical idea.
FIG. 40 is a schematic configuration diagram illustrating a third modification of the road surface interference sensor according to the second technical idea.
FIG. 41 is a schematic configuration diagram illustrating a fourth modification of the road surface interference sensor according to the second technical idea.
FIG. 42 is a schematic configuration diagram illustrating a fifth modification of the road surface interference sensor according to the second technical idea.
FIG. 43 is a schematic configuration diagram of a road surface interference sensor according to a third technical idea.
FIG. 44 is a schematic perspective view illustrating a part of a detection unit.
FIG. 45 is a cross-sectional view taken along a line XLV-XLV in FIG. 44.
FIG. 46 is a schematic cross-sectional view illustrating an underfloor structure below a floor panel.
FIG. 47 is a flowchart illustrating an outline of control processing executed by a sensor control unit.
FIG. 48 is a schematic configuration diagram illustrating a first modification of the road surface interference sensor according to the third technical idea.
FIG. 49 is a schematic configuration diagram illustrating a second modification of the road surface interference sensor according to the third technical idea.
FIG. 50 is a schematic configuration diagram illustrating a third modification of the road surface interference sensor according to the third technical idea.
FIG. 51 is a schematic cross-sectional view illustrating the underfloor structure below the floor panel.
FIG. 52 is a schematic cross-sectional view of a detection unit according to the third modification.
FIG. 53 is a diagram illustrating a state of the detection unit when an external force is applied.
FIG. 54 is a schematic cross-sectional view illustrating another example of the detection unit.
FIG. 55 is a schematic configuration diagram of a monitoring system according to a fourth technical idea.
FIG. 56 is a flowchart illustrating an outline of monitoring processing executed by the monitoring system.
FIG. 57 is a diagram illustrating a modification of monitoring enhancement processing.
FIG. 58 is a schematic configuration diagram illustrating a modification of the monitoring system.
FIG. 59 is a flowchart illustrating a modification of the monitoring processing executed by the monitoring system.

### DESCRIPTION OF EMBODIMENTS

The present description discloses embodiments related to a plurality of technical ideas. In the following embodiments, the same or equivalent parts as those described in the preceding embodiments are denoted by the same reference numerals, and the description thereof may be omitted. When only a part of components is described in the embodiment, components described in the preceding embodiments can be applied to other parts of the components. In the following embodiments, the embodiments can be partially combined with each other as long as the embodiments do not cause any trouble in combination, unless otherwise noted.

### [Common Items of Each Technical Idea]

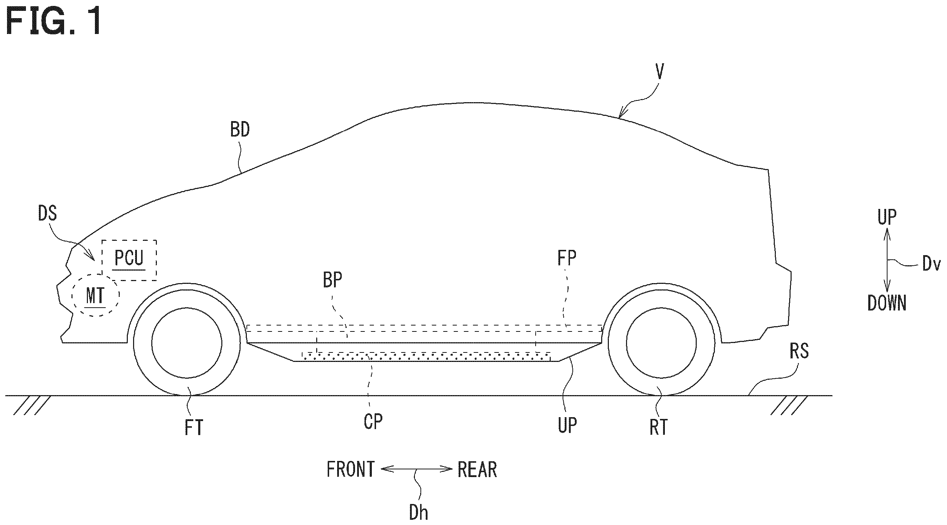

A vehicle V to which each of the plurality of technical ideas disclosed in the present description is applied is common. Therefore, first, the vehicle V to which a road surface interference sensor of the present disclosure is applied will be described with reference to FIGS. 1 to 4. Arrows indicating up and down and front and rear illustrated in FIG. 1 and the like indicate an up-down direction Dv and a front-rear direction Dh of the vehicle V.

The vehicle V is assumed to be an electric vehicle or a hybrid vehicle. As illustrated in FIG. 1, the vehicle V includes a vehicle body BD, a drive device DS, a battery pack BP, an under panel UP, front wheels FT, and rear wheels RT. The front wheels FT are provided forward of a center of the vehicle body BD in the front-rear direction Dh. The rear wheels RT are provided rearward of the center of the vehicle body BD in the front-rear direction Dh.

The vehicle body BD defines, on an inside thereof, a boarding space for an occupant to board, a front accommodation space located in front of the boarding space, and a rear accommodation space located in the rear of the boarding space. The front accommodation space accommodates the drive device DS and the like. The rear accommodation space accommodates luggage and the like of the occupant. The vehicle body BD includes a skeleton frame including a floor panel FP. The floor panel FP is a member that forms a floor surface of the vehicle body BD.

The drive device DS includes an electric motor MT and a PCU. The electric motor MT is mechanically connected to the front wheels FT. The PCU is electrically connected to the electric motor MT and the battery pack BP. The PCU includes, for example, an inverter and a converter. The PCU is an abbreviation for power control unit.

The battery pack BP is one of "underfloor devices" located below the floor panel FP. The battery pack BP supplies electric power stored therein to the PCU. The PCU receives the electric power supplied from the battery pack BP and drives the electric motor MT. The electric motor MT generates a driving force for rotating the front wheels FT using the electric power supplied from the PCU.

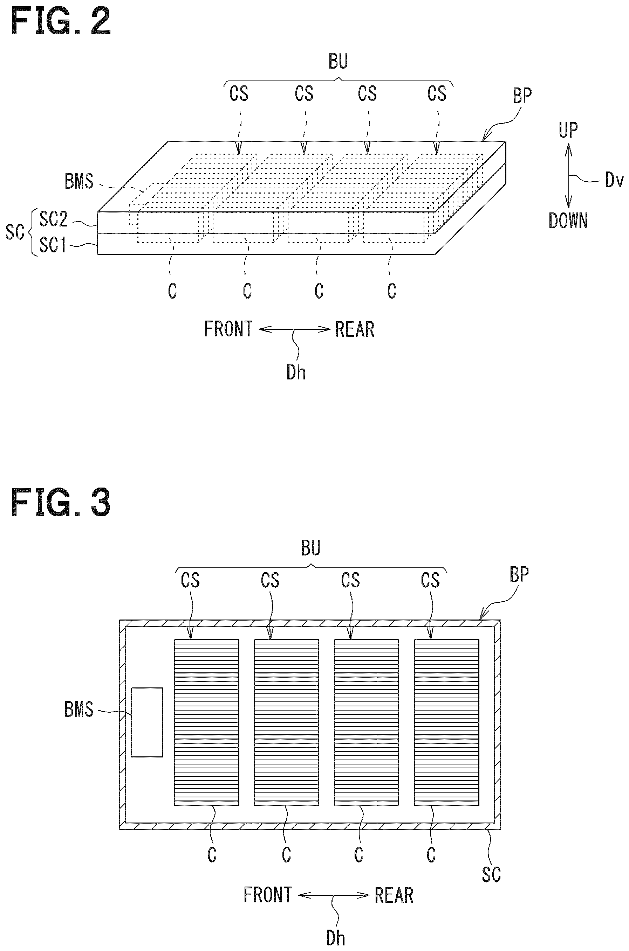

Specifically, as illustrated in FIG. 2, the battery pack BP includes an accommodation case SC. The accommodation case SC includes a case main body SC1 that opens upward and a lid SC2 that closes an opening of the case main body SC1. In the accommodation case SC, for example, the case main body portion SC1 is made of a metal material, and the lid SC2 is made of a resin material, thereby reducing a weight. As illustrated in FIG. 3, a battery management device BMS, a power storage unit BU, and the like are located inside the accommodation case SC.

The battery management device BMS is implemented as a computer including a processor, a memory, and an I/O device. The battery management device BMS executes various types of processing including charge and discharge control, abnormality monitoring, temperature control, and the like of the power storage unit BU according to a program stored in the memory. The memory of the battery management device BMS is implemented with a non-transient tangible storage medium.

The power storage unit BU includes a plurality of assembled batteries CS in which a plurality of battery cells C are connected in series or in parallel. In the assembled battery CS, the plurality of battery cells C are located in a row at predetermined intervals. The plurality of battery cells C constituting the assembled battery CS are sandwiched between a pair of end plates (not illustrated) and bound by a binding band. The battery cell C is a lithium ion battery. The battery cell C may be a battery other than a lithium ion battery.

The under panel UP is located below the battery pack BP. The under panel UP is made of a metal material. The under panel UP is provided to protect the underfloor device including the battery pack BP from an object on a road surface RS.

A gap is formed between the under panel UP and a lower surface of the battery pack BP. The gap is set such that a gap between the under panel UP and the battery pack BP is narrow enough to contact the lower surface of the battery pack BP when the under panel UP is deformed to protrude upward. An elastically deformable cushioning member CP is located in the gap. The cushioning member CP is made of, for example, a foam material such as polyurethane or polystyrene.

### [Road Surface Interference]

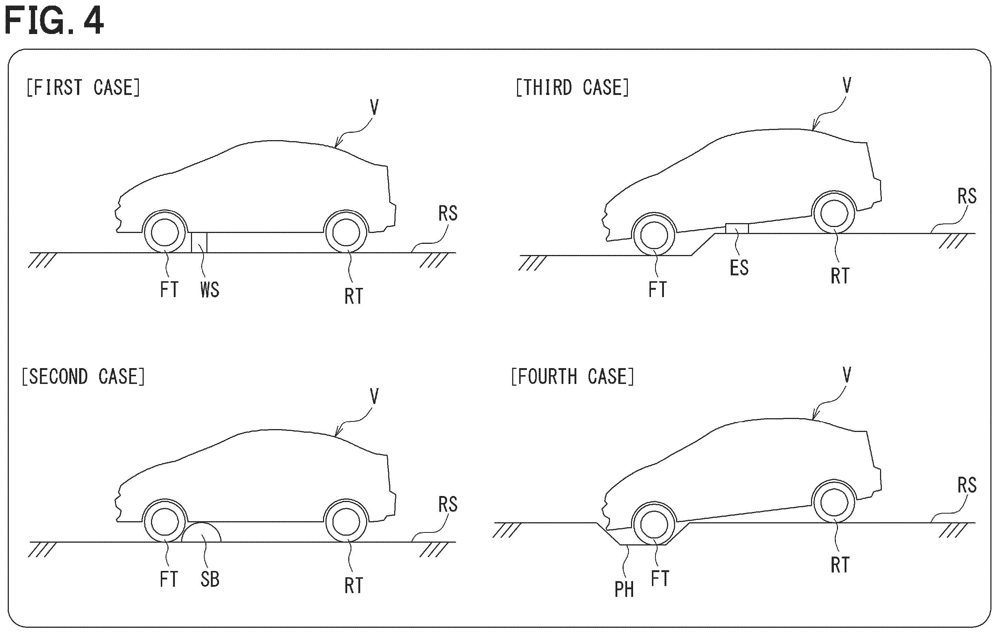

For example, as illustrated in a first case and a second case in FIG. 4, when the vehicle V travels on the road surface RS on which a protrusion such as a wheel stop WS and a speed breaker SB are installed, road surface interference may occur due to riding up and down on a protrusion and subsequent bouncing. For example, as illustrated in a third case and a fourth case in FIG. 4, when the vehicle V travels on the road surface RS having a depression such as a curb ES or a pothole PH, road surface interference may also occur. The "road surface interference" in the present description includes not only interference between the vehicle V and the above-described road surface RS itself or an object installed on the road surface RS, but also interference between the vehicle V and an object such as a falling stone or a flying stone falling on the road surface RS.

When the battery pack BP is provided below the floor panel FP as in the vehicle V, an external force due to road surface interference may cause impact to the underfloor device such as the battery pack BP, and from the viewpoint of protecting the underfloor device, it is preferable to appropriately detect the impact to the vehicle V due to the road surface interference.

On the other hand, the present inventors have studied installing the impact sensor described in **Patent Literature** 1 below the floor panel FP of the vehicle V in order to detect the road surface interference of the vehicle V. As a result, it has been found that, in the impact sensor described in **Patent Literature** 1, if deformation of the tube as the detection unit is localized, the pressure change of air is small, and it is difficult to obtain sufficient detection performance. As a result of intensive studies, the present inventors have devised a plurality of technical ideas capable of appropriately detecting the road surface interference. Hereinafter, each technical idea will be described.

### [First Technical Idea]

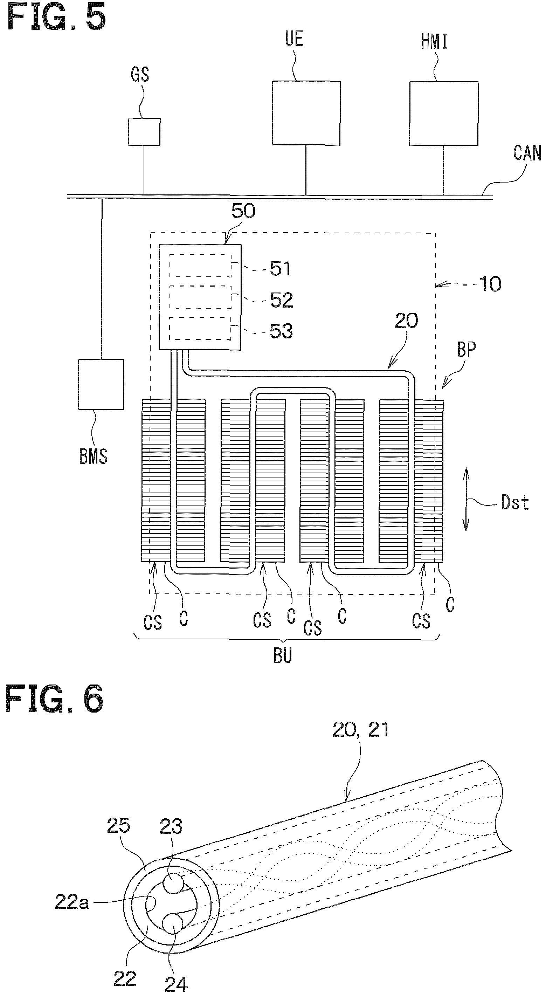

In a first technical idea, an external force applied to the vehicle V from a side of the road surface RS is detected using a road surface interference sensor 10 including a pressure sensor 20 that detects presence or absence of contact between a plurality of electrode lines 23 and 24. Hereinafter, an embodiment of the first technical idea will be described with reference to FIGS. 5 to 23.

As illustrated in FIG. 5, the road surface interference sensor 10 includes the pressure sensor 20 and a sensor control unit 50. The road surface interference sensor 10 is connected to a CAN which is a communication network of the vehicle V, and a signal according to the presence or absence of the contact between the plurality of electrode lines 23 and 24 is output to an outside via the CAN. The CAN is an abbreviation of controller area network.

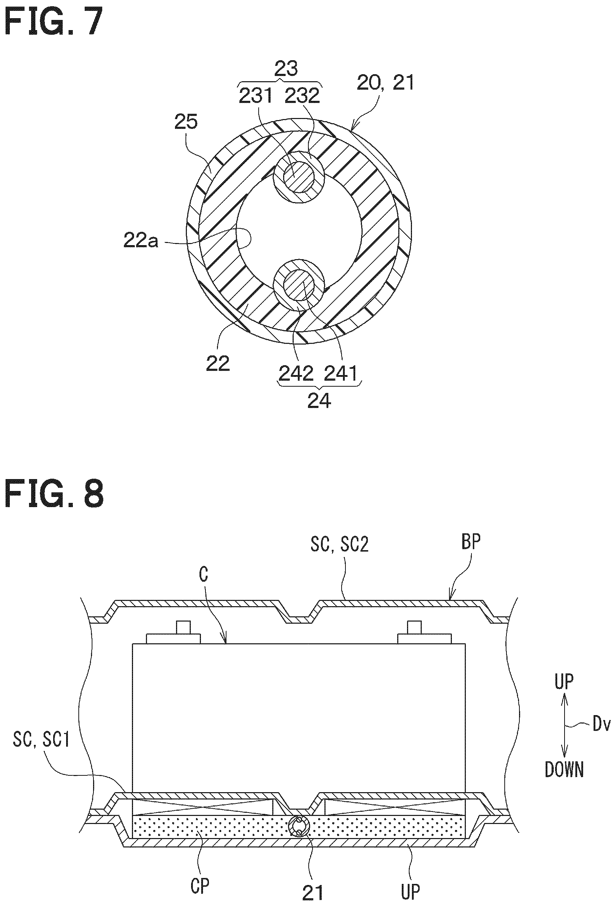

The pressure sensor 20 includes a detection unit 21 that detects the external force applied to the vehicle V from the side of the road surface RS. As illustrated in FIGS. 6 and 7, the detection unit 21 includes a hollow elastic body 22, the plurality of electrode lines 23 and 24 located on an inner surface 22a of the elastic body 22, and an outer layer member 25, and detects the external force applied to the vehicle V based on the presence or absence of the contact between the plurality of electrode lines 23 and 24. The detection unit 21 is located below the battery pack BP in a meandering manner along a direction orthogonal to an arrangement direction Dst of the battery cells C.

The elastic body 22 holds and fixes the plurality of electrode lines 23 and 24 in a spiral shape without electrical contact, and is easily deformed by an external force and immediately restored when the external force is eliminated. In the present technical idea, the elastic body 22 forms a hollow "insulator". The elastic body 22 is made of a flexible rubber material such as silicone rubber, ethylene propylene rubber, styrene butadiene rubber, or chloroprene rubber. The elastic body 22 may be made of a flexible plastic material such as polyethylene, polypropylene, or polyvinyl chloride.

The plurality of electrode lines 23 and 24 are held on the inner surface 22a of the elastic body 22. In the example illustrated in FIGS. 6 and 7, a number that is a multiple of two, that is, two electrode lines 23 and 24 are held on the inner surface 22a of the elastic body 22.

The plurality of electrode lines 23 and 24 include metal conductors 231 and 241. The metal conductors 231 and 241 are formed by a metal strand in which a plurality of metal wires are twisted together in order to obtain flexibility and restorability. The plurality of electrode lines 23 and 24 include, in addition to the metal conductors 231 and 241, outer layers 232 and 242 that cover outer peripheries of the metal conductors 231 and 241 in order to sufficiently obtain flexibility and restorability. The outer layers 232 and 242 are a conductive rubber layer or a plastic layer.

In order to prevent malfunction or disconnection due to bending, the plurality of electrode lines 23 and 24 are spirally located in a longitudinal direction of the elastic body 22 along the inner surface 22a of the elastic body 22 without electrical contact. The plurality of electrode lines 23 and 24 may have a spiral winding structure wound in one direction, or may have a spiral winding structure with a direction reversed in a middle.

The plurality of electrode lines 23 and 24 are embedded in the inner surface 22a of the elastic body 22 while protruding from the inner surface 22a of the elastic body 22 toward an axial center of the elastic body 22 such that the electrode lines 23 and 24 easily come into contact with each other even when an external force is applied from any direction in a cross-sectional direction.

One end of one of the electrode lines 23 and 24 is connected to a constant voltage source side, and one end of the other one of the electrode lines 23 and 24 is connected to a ground side. Other ends of the electrode lines 23 and 24 are electrically connected to each other via an electrical resistor R for voltage adjustment.

The outer layer member 25 is a member forming a protector in the detection unit 21. The outer layer member 25 is formed of an elastic member having rigidity higher than that of the elastic body 22. Accordingly, the outer layer member 25 is less likely to be deformed than the elastic body 22. The outer layer member 25 is set to have desired rigidity in consideration of a magnitude of the external force applied to the elastic body 22. The outer layer member 25 may include a core material made of metal or resin for adjusting rigidity.

The detection unit 21 is located to overlap two or more battery cells C in the up-down direction Dv. The detection unit 21 of the present example is located below the assembled battery CS so as to extend along the arrangement direction Dst of the battery cells C. Specifically, as illustrated in FIG. 8, at least a portion of the detection unit 21 is embedded in the cushioning member CP installed between the assembled battery CS and the under panel UP. The detection unit 21 may be embedded in an embedding groove or notch provided in the cushioning member CP, or may be sandwiched between two cushioning members CP. The detection unit 21 may be embedded in the cushioning member CP in such a manner that a portion of the detection unit 21 is exposed to an outside of the cushioning member CP.

The detection unit 21 configured as described above outputs a potential difference between the other ends of the electrode lines 23 and 24 as a signal indicating the presence or absence of the contact between the electrode lines 23 and 24. In the detection unit 21, in a state where a start switch of the vehicle V is turned on and electric power is supplied from a constant voltage source to one of the electrode lines 23 and 24, when the electrode lines 23 and 24 come into contact with each other due to the external force, the potential difference between the other ends of the electrode lines 23 and 24 becomes smaller.

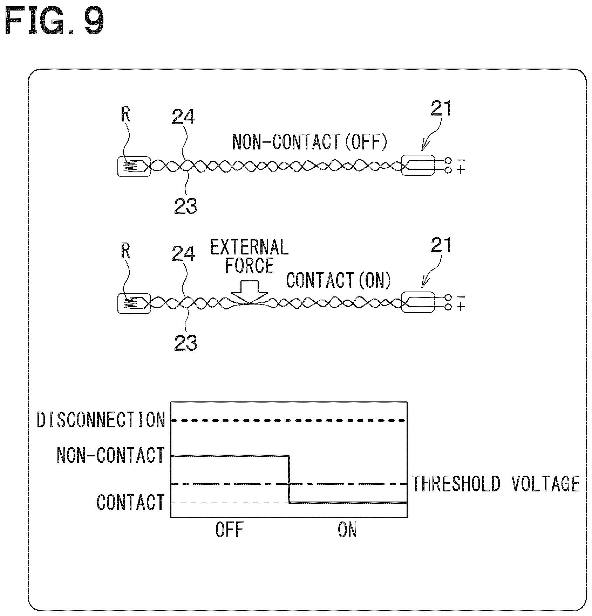

When the electrode lines 23 and 24 come into contact with each other due to the external force, for example, as illustrated in FIG. 9, the detection unit 21 outputs a voltage signal lower than that when the electrode lines 23 and 24 are not in contact with each other. When one of the electrode lines 23 and 24 is disconnected, the detection unit 21 outputs a voltage signal higher than that when the electrode lines 23 and 24 are not in contact with each other. The voltage signal output by the detection unit 21 is output to the sensor control unit 50.

When a plurality of assembled batteries CS are mounted on the vehicle V, it is preferable that the road surface interference sensor 10 is provided with the number of detection units 21 same as the number of the assembled batteries CS. For example, when four assembled batteries CS are mounted, it is preferable that four detection units 21 are provided as many as the assembled batteries CS. The number of detection units 21 is not limited to the number same as the number of assembled batteries CS, and may be different from the number of assembled batteries CS.

On the other hand, when the pressure sensor 20 has a sensor configuration including a plurality of detection units 21, it is necessary to provide a number of IF ports corresponding to each of the plurality of detection units 21 at a signal output destination (in the present example, the sensor control unit 50).

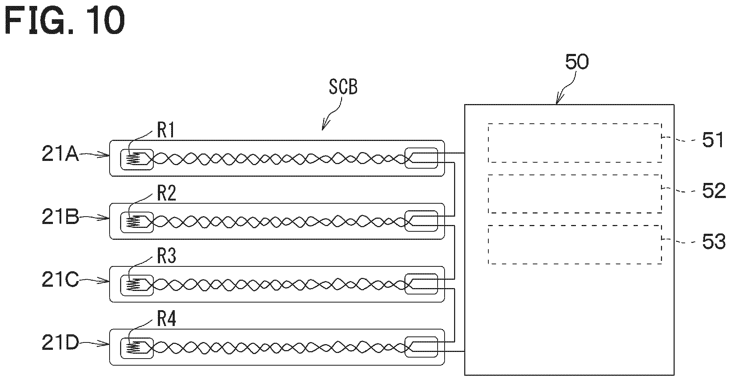

In consideration of these, as illustrated in FIG. 10, the pressure sensor 20 of the present example is implemented as a series connection body SCB in which the plurality of detection units 21 are electrically connected in series. Hereinafter, for convenience of description, the plurality of detection units 21 forming the series connection body SCB may be referred to as a first detection unit 21A, a second detection unit 21B, a third detection unit 21C, and a fourth detection unit 21D.

Electrical resistance values of electrical resistors R1, R2, R3, and R4 provided respectively in the detection units 21A, 21B, 21C, and 21D are different. The electrical resistance values of the electrical resistors R1, R2, R3, and R4 are set to different values such that there is a significant difference in output of the series connection body SCB when the external force is detected by each of the detection units 21A, 21B, 21C, and 21D. An output voltage of each of the detection units 21A, 21B, 21C, and 21D is proportional to a magnitude relationship of the electrical resistors R1, R2, R3, and R4.

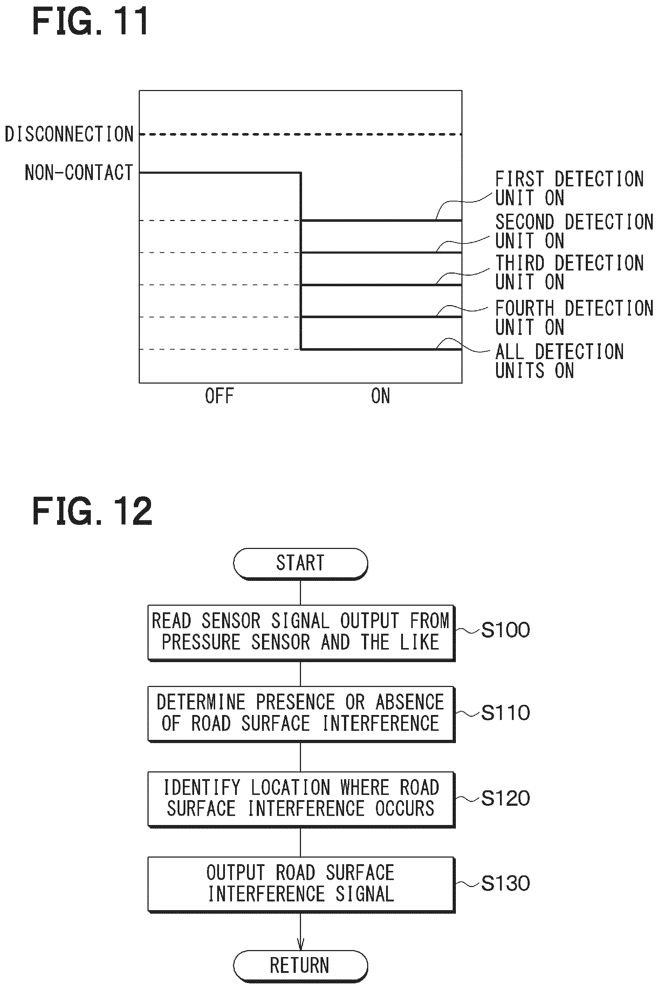

The series connection body SCB configured as described above outputs a potential difference between both ends thereof as a signal indicating the presence or absence of the contact between the electrode lines 23 and 24. In the series connection body SCB, in a state where electric power is supplied from the constant voltage source, when the external force is applied on at least one of the detection units 21A, 21B, 21C, and 21D, and the electrode lines 23 and 24 come into contact with each other, the output voltage decreases as illustrated in FIG. 11. In the series connection body SCB of the present example, the electrical resistance values of the electrical resistors R1, R2, R3, and R4 are different, and a degree of decrease in output voltage varies depending on the detection units 21A, 21B, 21C, and 21D when the external force is applied. As a result, the pressure sensor 20 can identify one of the plurality of detection units 21 that has detected the external force.

The sensor control unit 50 is implemented as a computer including an I/O device including a processor, a memory, and a communication unit. The series connection body SCB forming the plurality of detection units 21 is connected to the I/O device of the sensor control unit 50. The sensor control unit 50 is connected to the CAN. The sensor control unit 50 is connected to the battery management device BMS, an acceleration sensor GS, a top level control device UE, a display control device HMI, and the like via the CAN. The memory of the sensor control unit 50 is implemented with a non-transient tangible storage medium.

The sensor control unit 50 executes, according to a program stored in the memory, various types of processing including determination processing of determining the presence or absence of road surface interference, identification processing of identifying a location where an external force is applied, output processing of outputting a signal according to the presence or absence of the contact between the plurality of electrode lines 23 and 24 to the outside, and the like.

The sensor control unit 50 includes a determination unit 51, an identification unit 52, and a signal output unit 53 as functional configurations implemented on the computer. The determination unit 51 is a functional configuration that determines the presence or absence of the road surface interference. The identification unit 52 is a functional configuration that identifies one of the plurality of detection units 21 that has detected the external force. The signal output unit 53 is a functional configuration that outputs a signal according to the presence or absence of the contact between the plurality of electrode lines 23 and 24. Each functional configuration is merely a functional configuration set for convenience to facilitate understanding of the contents of the present disclosure. Therefore, even if these functional configurations are not actually implemented as subroutines or hardware, the requirements of the present disclosure can be satisfied as long as the predetermined functions or processing of the present disclosure can be implemented.

Next, an example of control processing executed by the sensor control unit 50 will be described with reference to FIG. 12. The control processing illustrated in FIG. 12 is executed by the sensor control unit 50 periodically or irregularly while the vehicle V is traveling, for example.

In step S100, the sensor control unit 50 reads sensor signals output from the pressure sensor 20, the acceleration sensor GS, and the like. The sensor control unit 50 reads a sensor output of the acceleration sensor GS via the CAN.

The acceleration sensor GS is a sensor that is installed on the vehicle V and detects vibration and impact generated while the vehicle V is traveling, or the like. The acceleration sensor GS may be implemented as a dedicated component that detects vibration and impact of an underfloor device of the vehicle V, or may be implemented as a general-purpose component that detects vibration and impact of the entire vehicle V. In the present technical idea, the acceleration sensor GS forms, separately from the detection unit 21, a physical quantity detection unit that detects a physical quantity changing due to the road surface interference. This also applies to other technical ideas.

Subsequently, in step S110, the sensor control unit 50 determines presence or absence of road surface interference based on an output of the detection unit 21 forming the pressure sensor 20 and an output of the acceleration sensor GS. For example, the sensor control unit 50 determines that the road surface interference occurs when the output voltage of the detection unit 21 forming the pressure sensor 20 falls below a predetermined threshold voltage for road surface interference detection and the acceleration sensor GS detects acceleration in the up-down direction Dv that is equal to or greater than a certain level. The sensor control unit 50 determines that the road surface interference does not occur when the output voltage of the detection unit 21 is equal to or greater than the threshold voltage for the road surface interference detection or when the acceleration sensor GS does not detect the acceleration in the up-down direction Dv that is equal to or greater than a certain level. In the determination processing, it is preferable to also determine whether the pressure sensor 20 is disconnected.

Subsequently, in step S120, the sensor control unit 50 identifies a location where the road surface interference occurs. The sensor control unit 50 of the present example identifies one of the plurality of detection units 21A, 21B, 21C, and 21D that has detected the external force. The sensor control unit 50 uses the fact that the degree of decrease in output voltage varies depending on each of the detection units 21A, 21B, 21C, and 21D when the external force is applied, and identifies one of the plurality of detection units 21A, 21B, 21C, and 21D that has detected the external force.

The processing in step S120 is performed on a premise that the road surface interference is detected. Therefore, when the road surface interference is not detected in step S110, the sensor control unit 50 skips the determination processing in step S120.

Subsequently, when the road surface interference is detected, the sensor control unit 50 outputs a road surface interference signal indicating that the road surface interference is detected to the battery management device BMS, the top level control device UE, the display control device HMI, and the like via the CAN. When the road surface interference is detected, the battery management device BMS performs, for example, abnormality diagnosis of the assembled battery CS. When the road surface interference is detected, the top level control device UE operates, for example, an automatic brake to restrict driving of the vehicle V. When the road surface interference is detected, the display control device HMI displays, for example, a location where an external force is applied, or notifies a message prompting confirmation of the location.

The road surface interference sensor 10 described above includes the detection unit 21 that is located below the floor panel FP of the vehicle V and detects the external force applied to the vehicle V from the side of the road surface RS. The detection unit 21 includes the hollow elastic body 22 and the plurality of electrode lines 23 and 24 located on the inner surface 22a of the elastic body 22, and detects the external force based on the presence or absence of the contact between the plurality of electrode lines 23 and 24.

As described in **Patent Literature** 1, when detecting, as an external force, the pressure change of air inside the tube due to the deformation of the tube, if the deformation of the tube is localized, the pressure change of air is small, and it is difficult to appropriately detect the impact.

On the other hand, when detecting the external force based on the presence or absence of the contact between the plurality of electrode lines 23 and 24 due to the deformation of the elastic body 22, even if the deformation of the elastic body 22 is localized, a short circuit is caused by the contact between the plurality of electrode lines 23 and 24. Therefore, according to the road surface interference sensor 10 of the present embodiment, the external force applied to the vehicle V from the side of the road surface RS can be appropriately detected. In particular, the road surface interference sensor 10 of the present example has excellent mountability on the vehicle V since it is not necessary to secure a space for installing the pressure sensors at both ends of the tube as in **Patent Literature** 1.

The road surface interference sensor 10 of the present example has the following features.

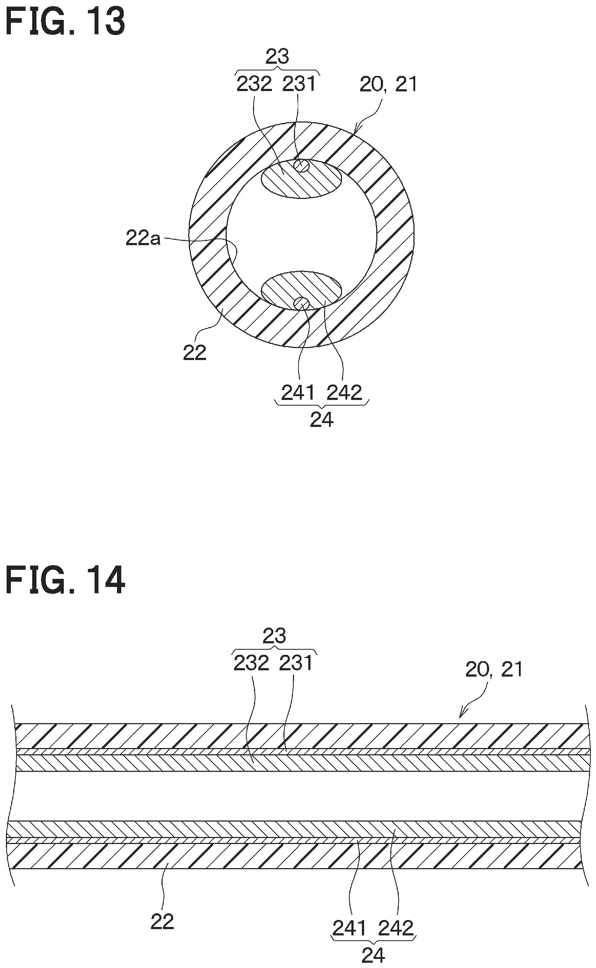

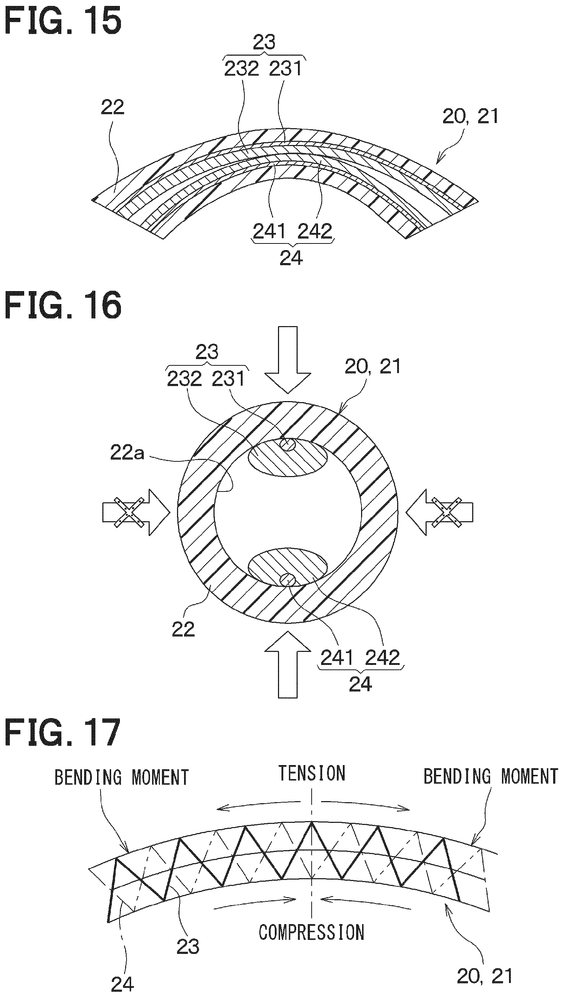

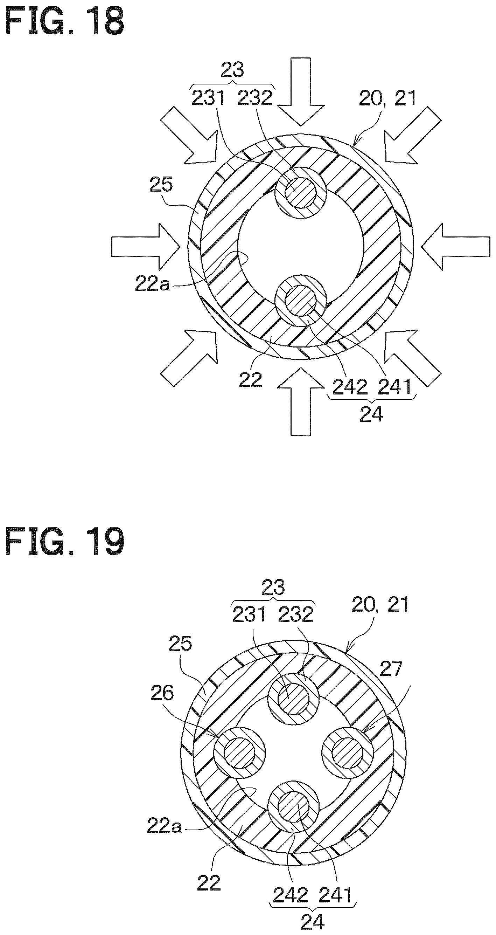

(1) The detection unit 21 includes the outer layer member 25 that covers the elastic body 22. The outer layer member 25 is formed of an elastic member having rigidity higher than that of the elastic body 22. As described above, when the elastic body 22 is covered with the outer layer member 25 having high rigidity, sensor sensitivity of the road surface interference sensor 10 can be optimized by adjusting a magnitude of the external force applied to the elastic body 22 while protecting the elastic body 22 by the outer layer member 25.
(2) As illustrated in FIGS. 13 and 14, the two electrode lines 23 and 24 can be located in parallel along the longitudinal direction of the elastic body 22 without being in electrical contact with each other. However, in the detection unit 21 having such a structure, for example, as illustrated in FIG. 15, when the detection unit 21 is bent, there is a concern that a malfunction such as contact between the two electrode lines 23 and 24 may occur. For example, as illustrated in FIG. 16, it is difficult for the detection unit 21 to detect an external force applied from a direction orthogonal to the arrangement direction of the two electrode lines 23 and 24.
   On the other hand, the plurality of electrode lines 23 and 24 are spirally located in the longitudinal direction of the elastic body 22 along the inner surface 22a of the elastic body 22 without being in electrical contact with each other. For example, as illustrated in FIG. 17, the detection unit 21 having such a structure is less likely to malfunction when the detection unit 21 is bent, and resistance to bending moment, tensile stress, and compressive stress is easily secured. As illustrated in FIG. 18, the detection unit 21 can detect the external force applied from various directions.
(3) The road surface interference sensor 10 includes the signal output unit 53 that outputs a signal according to the presence or absence of the contact between the plurality of electrode lines 23 and 24. The series connection body SCB in which the plurality of detection units 21 are electrically connected in series is connected to the signal output unit 53.
   By using the plurality of detection units 21, external forces applied on different locations on the vehicle V can be detected, but it is necessary to provide a number of IF ports corresponding to each of the plurality of detection units 21 at the signal output destination.
   On the other hand, when the series connection body SCB in which the plurality of detection units 21 are electrically connected in series is connected to the signal output unit 53, the external forces applied on different locations on the vehicle V can be detected while reducing the number of IF ports at the signal output destination.
(4) In the detection unit 21, at least two electrode lines 23 and 24 are connected via the electrical resistor R. According to this, the external force applied on the vehicle V can be appropriately detected by securing a difference between the output when the plurality of electrode lines 23 and 24 are in contact with each other and the output when they are not in contact with each other.
(5) The road surface interference sensor 10 includes the identification unit 52 that identifies one of the plurality of detection units 21 that has detected the external force. The electrical resistance value of the electrical resistor R in at least a part of the detection units 21 is different from that in the other detection units 21. Based on the output from the series connection body SCB, the identification unit 52 identifies one of the plurality of detection units 21 that has detected the external force. With such a configuration, the external forces applied on different locations on the vehicle V can be detected.
(6) The road surface interference sensor 10 includes the determination unit 51 that determines the presence or absence of the road surface interference. The acceleration sensor GS as the physical quantity detection unit that detects a physical quantity changing due to the road surface interference is installed on the vehicle V separately from the detection unit 21. The determination unit 51 determines the presence or absence of the road surface interference based on the output of the detection unit 21 and the output of the acceleration sensor GS installed on the vehicle V.
   When the external force is applied on the vehicle V due to the road surface interference, the output of the acceleration sensor GS installed on the vehicle V changes due to the impact applied to the vehicle V. In consideration of this, it is preferable to determine the presence or absence of the road surface interference based on the output of the acceleration sensor GS installed on the vehicle V in addition to the output of the detection unit 21. According to this, as compared with the case where the presence or absence of the road surface interference is determined only by the output of the detection unit 21, erroneous detection of the road surface interference due to malfunction of the detection unit 21 can be reduced, and thus determination accuracy of the road surface interference can be improved.
(7) The signal according to the external force applied to the vehicle V is output to the outside via the communication network of the vehicle V. According to this, the external force applied on the vehicle V can be detected while reducing the number of I/O ports at the signal output destination.
(8) The cushioning member CP is located between the road surface RS and the underfloor device installed below the floor panel FP. At least a portion of the detection unit 21 is embedded in the cushioning member CP. As described above, when at least a portion of the detection unit 21 is embedded in the cushioning member CP, the sensor sensitivity of the road surface interference sensor 10 can be optimized by adjusting the magnitude of the external force applied to the elastic body 22 of the detection unit 21 while protecting the detection unit 21 by the cushioning member CP.
(9) The underfloor device is the power storage unit BU including the plurality of battery cells C. According to this, since the impact applied to the power storage unit BU can be grasped based on the output of the road surface interference sensor 10, it is easy to implement a measure against a problem caused by the impact on the power storage unit BU.
(10) The detection unit 21 is located such that at least a part of the detection unit 21 overlaps two or more battery cells C in the up-down direction Dv. According to this, the impact on the plurality of battery cells C can be detected by the single detection unit 21. This greatly contributes to simplification of the sensor configuration of the road surface interference sensor 10.

### [Modification of Detection Unit 21]

In the detection unit 21, three or more electrode lines 23 and 24 may be held on the inner surface 22a of the elastic body 22. For example, as illustrated in FIG. 19, in the detection unit 21, four electrode lines 23, 24, 26, and 27 may be held on the inner surface 22a of the elastic body 22. As described above, when three or more electrode lines 23 and 24 are held on the inner surface 22a of the elastic body 22, the number of electrodes on a circumference of a cross section of the elastic body 22 increases, and the electrodes easily come into contact with each other even if the deformation of the elastic body 22 is small, thereby improving the sensor sensitivity. The plurality of electrode lines 23 and 24 may be formed of sheet-shaped metal lines.

### [Modification of Sensor Configuration]

The road surface interference sensor 10 is not limited to that illustrated in the above-described embodiment. The road surface interference sensor 10 can be variously modified as follows, for example.

### [First Modification]

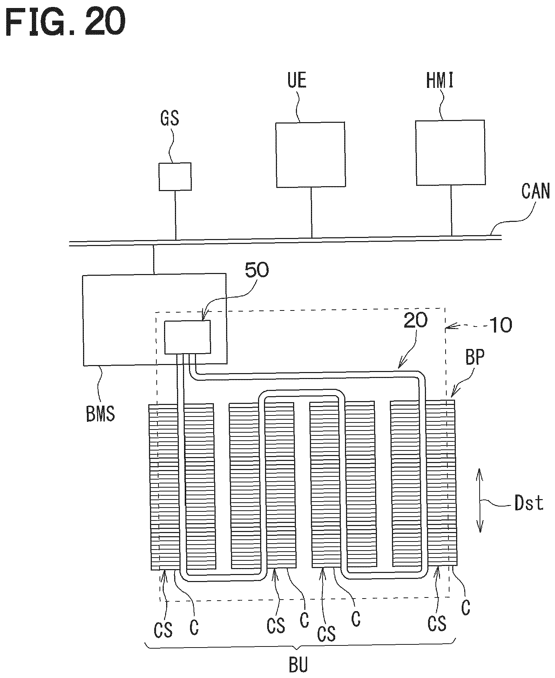

For example, as illustrated in FIG. 20, the road surface interference sensor 10 may be configured such that the sensor control unit 50 is integrated with the battery management device BMS as one functional configuration of the battery management device BMS. In this case, the road surface interference sensor 10 may output a signal from the detection unit 21 as an analog signal to the battery management device BMS. The sensor control unit 50 may be integrated with a control device different from the battery management device BMS. The sensor control unit 50 is not essential and may be omitted.

### [Second Modification]

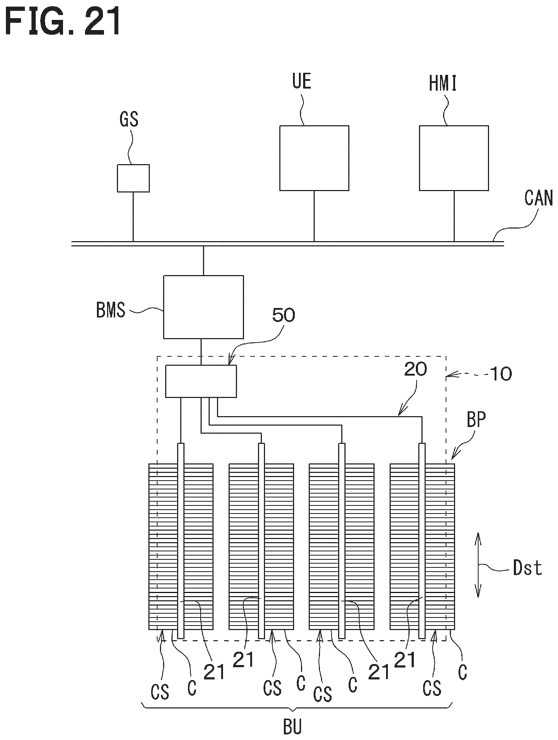

For example, as illustrated in FIG. 21, the road surface interference sensor 10 may be configured such that each of the plurality of detection units 21 is connected to the sensor control unit 50. The sensor control unit 50 may be connected to the CAN via the battery management device BMS. In the road surface interference sensor 10 illustrated in FIG. 21, the sensor control unit 50 may be directly connected to the CAN.

### [Third Modification]

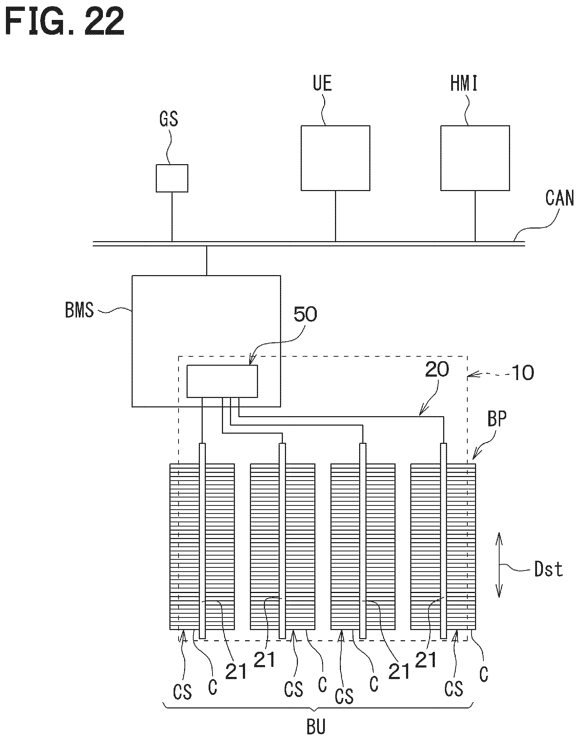

For example, as illustrated in FIG. 22, the road surface interference sensor 10 may be configured such that the sensor control unit 50 is integrated with the battery management device BMS, and each of the plurality of detection units 21 is connected to the battery management device BMS.

### [Fourth Modification]

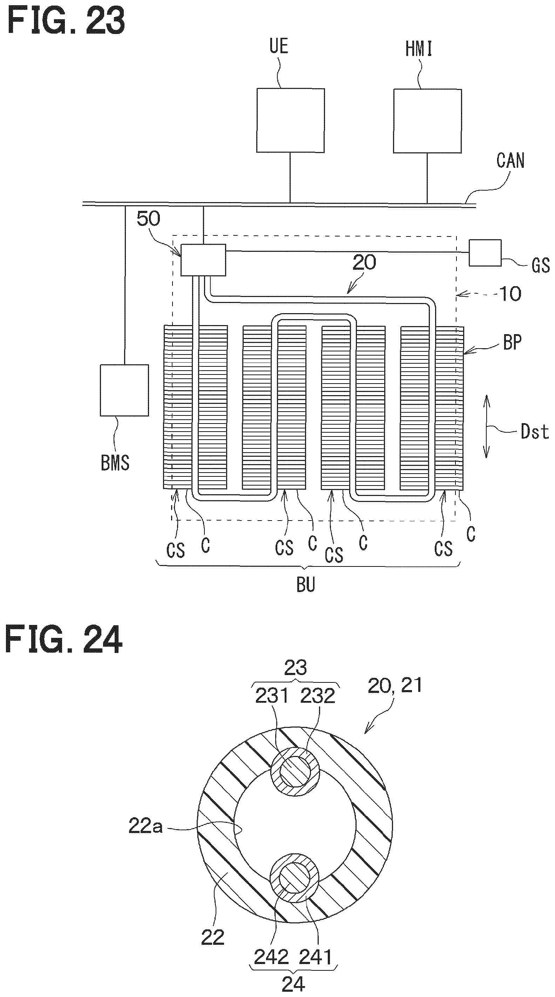

For example, as illustrated in FIG. 23, the acceleration sensor GS may be directly connected to the sensor control unit 50 of the road surface interference sensor 10. The acceleration sensor GS may be connected to the CAN via another device such as the battery management device BMS.

### [Fifth Modification]

For example, as illustrated in FIG. 24, the cylindrical outer layer member 25 is omitted from the detection unit 21. Instead, the pressure sensor 20 is provided with a detection enlargement unit 28 for enlarging a detection range of the external force.

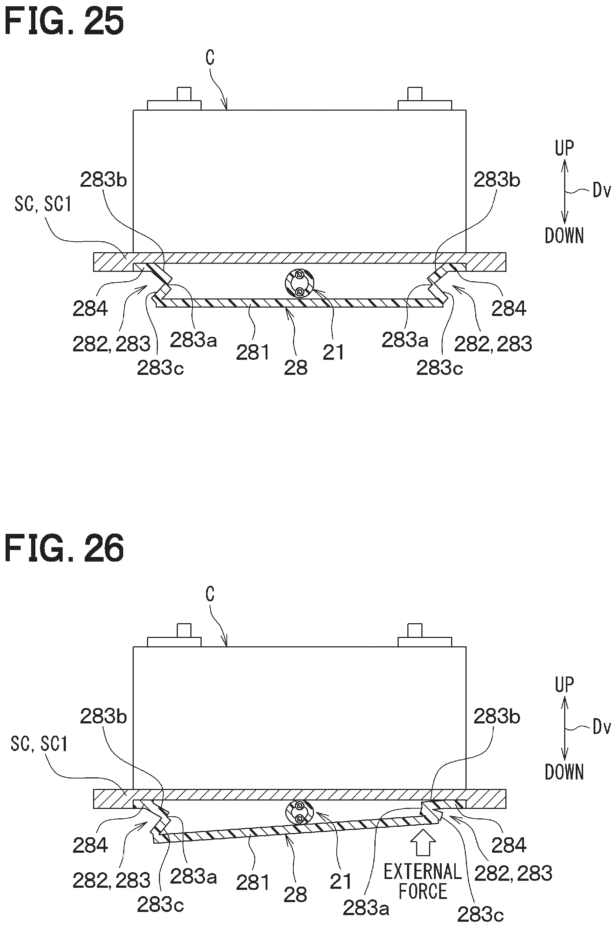

As illustrated in FIG. 25, the detection enlargement unit 28 of the present example includes a plate-shaped protector portion 281, deformation portions 282, and connection portions 284 for connecting the deformation portions 282 to a vehicle side. The detection enlargement unit 28 of the present example is made of a resin material. The protector portion 281, the deformation portions 282, and the connection portions 284 of the detection enlargement unit 28 are integrally molded, for example.

The protector portion 281 is located on a side of a road surface with respect to the floor panel FP. The protector portion 281 is formed of an elastic member having rigidity higher than that of the elastic body 22. The protector portion 281 has a larger overlapping area with the road surface RS than that of the detection unit 21. The protector portion 281 of the present example has a plate width capable of covering substantially the entire lower surface of the battery cell C, for example. Although not illustrated, in the pressure sensor 20, a plurality of protector portions 281 are located side by side in the arrangement direction Dst of the battery cells C.

The deformation portion 282 forms a displacement unit that displaces the protector portion 281 in a direction approaching the floor panel FP. The deformation portion 282 is a deformation member that has rigidity lower than that of the protector portion 281 and is deformed when an external force is applied. The deformation portions 282 are provided at both ends of the protector portion 281. The deformation portion 282 of the present example is formed by a spring portion 283 that deforms in the direction approaching the floor panel FP. The spring portion 283 includes a thin portion 283a thinner than the protector portion 281, and a pair of plate portions 283b and 283c connected to the thin portion 283a. Since the spring portion 283 includes the thin portion 283a, the spring portion 283 has rigidity lower than that of the protector portion 281 and is deformed by an external force. Specifically, the spring portion 283 deforms in the direction approaching the floor panel FP by being bent from the thin portion 283a as a starting point. One of the pair of plate portions 283b and 283c is connected to the protector portion 281 in a posture intersecting a plate surface of the protector portion 281. The other one of the pair of plate portions 283b and 283c is connected to the connection portion 284 in a posture intersecting the plate surface of the protector portion 281.

The connection portion 284 connects the deformation portion 282 to a vehicle body side such as the accommodation case SC of the battery pack BP. The connection portion 284 is connected to the floor panel FP or the like with a push rivet or the like. The connection portion 284 may be connected to the vehicle body side with an adhesive or the like. The connection portion 284 may be connected to a vehicle body of the vehicle.

The detection unit 21 is located between the protector portion 281 and the floor panel FP. Specifically, the detection unit 21 is located on an upper surface of the protector portion 281 opposite to a lower surface facing the road surface. The detection unit 21 is connected to the protector portion 281 with an adhesive or the like such that a position of the detection unit 21 does not change. The detection unit 21 may be connected to the accommodation case SC, or may be connected to both the protector portion 281 and the accommodation case SC. In the present example, the position of the detection unit 21 is defined by connecting the detection unit 21 to the protector portion 281 with an adhesive or the like, but the present disclosure is not limited thereto, and the position of the detection unit 21 may be defined by a member such as a guide or a rail.

For example, as illustrated in FIG. 26, the pressure sensor 20 configured as described above is pressed by the protector portion 281 when the protector portion 281 is displaced in the direction approaching the floor panel FP by the external force. At this time, the external force can be detected by contact between the electrode lines 23 and 24 inside the detection unit 21.

Since the pressure sensor 20 of the present example includes the protector portion 281 having an area larger than that of the detection unit 21, the pressure sensor 20 can also detect an external force applied to a position away from the detection unit 21. That is, the pressure sensor 20 of the present example can expand a detection range of the external force with a simple structure.

### [Sixth Modification]

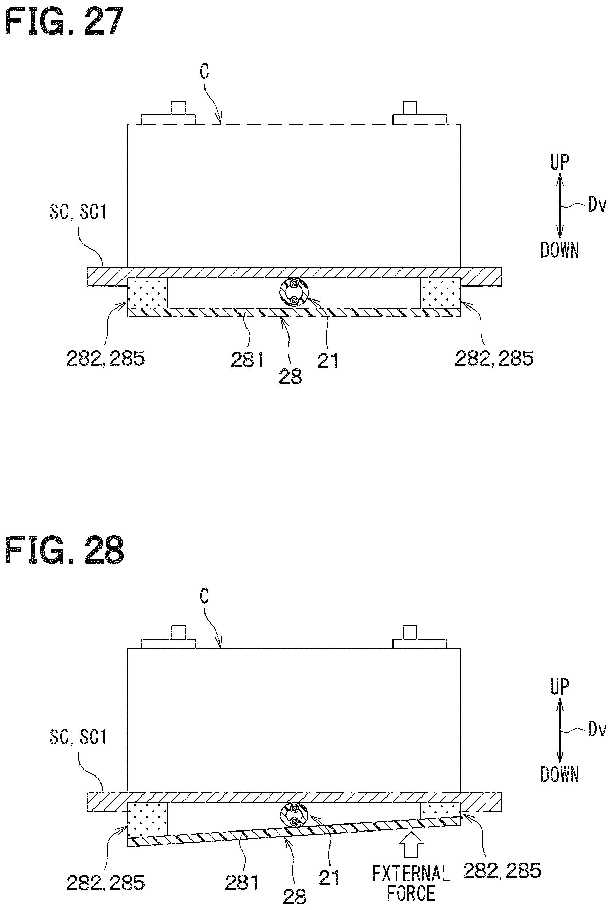

In the detection enlargement unit 28 described in the fifth modification, for example, as illustrated in FIG. 27, the deformation portion 282 may be formed by a cushion portion 285 having rigidity lower than that of the protector portion 281. The cushion portion 285 is made of, for example, a foam material such as polyurethane or polystyrene. The detection enlargement unit 28 of the present example includes the protector portion 281 and the cushion portion 285, and both are joined with an adhesive. In the detection enlargement unit 28, a surface of the cushion portion 285 opposite to a surface to which the protector portion 281 is connected is connected to a vehicle body side.

For example, as illustrated in FIG. 28, the pressure sensor 20 configured as described above is pressed by the protector portion 281 when the protector portion 281 is displaced in the direction approaching the floor panel FP by the external force. At this time, the external force can be detected by contact between the electrode lines 23 and 24 inside the detection unit 21. Since the pressure sensor 20 of the present example includes the protector portion 281 having an area larger than that of the detection unit 21, the pressure sensor 20 can also detect an external force applied to a position away from the detection unit 21 as in the fifth modification.

### [Other Modifications]

In the detection unit 21, it is preferable that the elastic body 22 is covered with the outer layer member 25, but the present disclosure is not limited thereto. For example, the outer layer member 25 may be omitted from the detection unit 21. The outer layer member 25 is omitted from the detection unit 21 described in the fifth and sixth modifications, but the present disclosure is not limited thereto. The detection unit 21 may be provided with, for example, the outer layer member 25 having such rigidity as to be deformed when coming into contact with the protector portion 281.

It is preferable that the detection unit 21 is located in a spiral shape in the longitudinal direction of the elastic body 22 along the inner surface 22a of the elastic body 22 without being in electrical contact with each other, but the present disclosure is not limited thereto. The detection unit 21 may be located in parallel along the longitudinal direction of the elastic body 22 with the two electrode lines 23 and 24 not in electrical contact with each other, for example. The elastic body 22 may be an insulator, and a material having no flexibility or elasticity may be adopted.

It is preferable that, in the detection unit 21, at least two electrode lines 23 and 24 are connected via the electrical resistor R, but the present disclosure is not limited thereto. The electrical resistor R may be omitted from the detection unit 21.

It is preferable that the road surface interference sensor 10 is configured to determine presence or absence of road surface interference based on an output of the detection unit 21 and an output of the acceleration sensor GS, but this is not essential. The road surface interference sensor 10 may be configured to determine the presence or absence of road surface interference based only on the output of the detection unit 21, for example. The road surface interference sensor 10 may be configured to determine the presence or absence of road surface interference based on, for example, the output of the detection unit 21 and an output of a pressure sensor that detects pressure applied to the lower side of the floor panel FP of the vehicle V. In this case, the pressure sensor functions as a physical quantity detection unit that detects a physical quantity changing due to the road surface interference, separately from the detection unit 21. This also applies to other technical ideas. The physical quantity detection unit may be configured as a dedicated product dedicated to road surface interference, or may be configured as a general-purpose product that detects vibration or impact of the vehicle V.

It is preferable that the road surface interference sensor 10 includes the identification unit 52 that identifies one of the plurality of detection units 21 that has detected the external force, but the present disclosure is not limited thereto. For example, the identification unit 52 may be omitted from the road surface interference sensor 10.

It is preferable that the road surface interference sensor 10 includes the determination unit 51 that determines the presence or absence of road surface interference, but the present disclosure is not limited thereto. For example, the determination unit 51 may be omitted from the road surface interference sensor 10, and the road surface interference sensor 10 may be configured to simply detect the external force applied on the vehicle V due to the road surface interference.

The road surface interference sensor 10 may be configured such that a signal according to presence or absence of contact between the plurality of electrode lines 23 and 24 is output to the outside by a method other than the communication network of the vehicle V.

In the road surface interference sensor 10, the detection unit 21 may not be embedded in the cushioning member CP. It is preferable that the detection unit 21 is located such that at least a portion of the detection unit 21 extends along the arrangement direction Dst of the battery cells C forming the assembled battery CS, but the present disclosure is not limited thereto. The detection unit 21 may be located to extend along a direction orthogonal to the arrangement direction Dst of the battery cells C forming the assembled battery CS. The detection unit 21 may be located not to overlap the battery cell C in the up-down direction Dv.

The vehicle V to which the road surface interference sensor 10 is applied is not limited to those described above. The road surface interference sensor 10 is also applicable to the vehicle V driven by an internal combustion engine, the vehicle V in which the under panel UP is omitted, and the like. The road surface interference sensor 10 may be configured to detect impact applied to the power storage unit BU, but may also be configured to detect impact applied to an underfloor device other than the power storage unit BU. The plurality of battery cells C forming the power storage unit BU are bound as the assembled battery CS by a binding band or the like, but this is not essential.

### [Second Technical Idea]

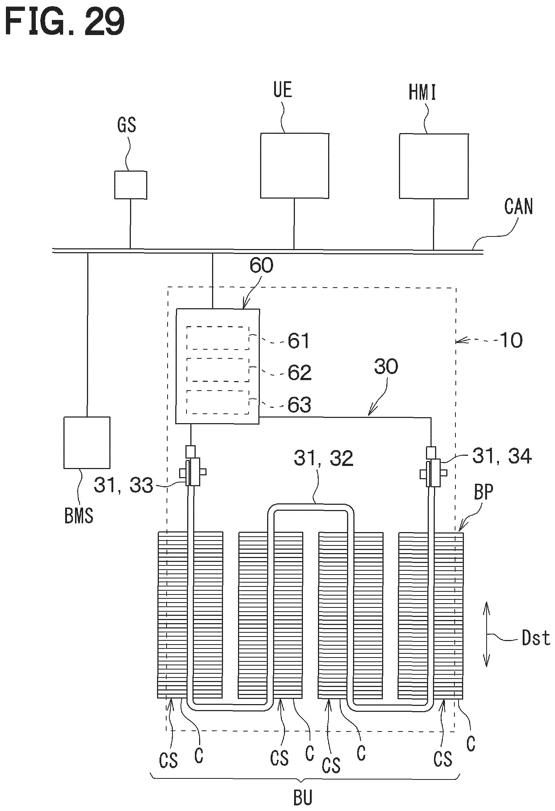

In a second technical idea, an external force applied to the vehicle V from a side of the road surface RS is detected using the road surface interference sensor 10 including an impact sensor 30. Hereinafter, an embodiment of the second technical idea will be described with reference to FIGS. 29 to 42.

As illustrated in FIG. 29, the road surface interference sensor 10 includes the impact sensor 30 and a sensor control unit 60. The road surface interference sensor 10 is connected to a CAN which is a communication network of the vehicle V, and a signal from a pressure sensor is output to an outside via the CAN.

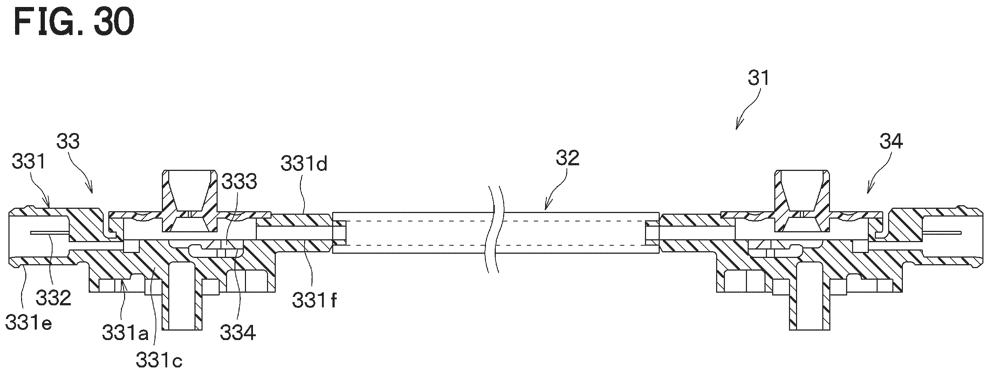

The impact sensor 30 includes a detection unit 31 that detects an external force applied to the vehicle V from the side of the road surface RS. As illustrated in FIGS. 29 and 30, the detection unit 31 includes a flexible hollow tube 32, a first pressure sensor 33, and a second pressure sensor 34, and detects the external force applied to the vehicle V based on a pressure change inside the tube 32.

The tube 32 is an elongated annular tube having a substantially annular cross section. The tube 32 is made of silicone rubber, which is a flexible rubber material. A length of the tube 32 is set, for example, to be equal to or greater than a value obtained by multiplying a dimension of the battery cells C in the assembled battery CS in the arrangement direction Dst by the number of assembled batteries CS.

The detection unit 31 is located to overlap two or more battery cells C in the up-down direction Dv. In the detection unit 31 of the present example, at least the tube 32 is located below the assembled battery CS to extend along the arrangement direction Dst of the battery cells C. The tube 32 is located below the battery pack BP in a meandering manner along a direction orthogonal to the arrangement direction Dst.

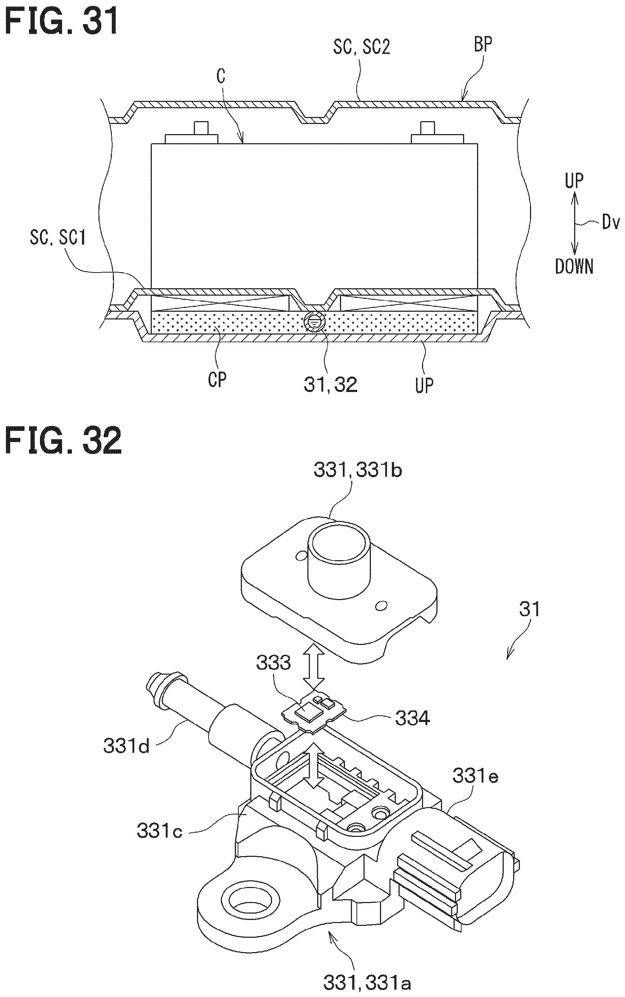

Specifically, as illustrated in FIG. 31, at least a portion of the tube 32 is embedded in the assembled battery CS and the cushioning member CP. The detection unit 31 may be embedded in an embedding groove or notch provided in the cushioning member CP, or may be sandwiched between two cushioning members CP. The detection unit 31 may be embedded in the cushioning member CP in such a manner that a portion of the detection unit 31 is exposed to an outside of the cushioning member CP.

As illustrated in FIG. 30, the tube 32 has one end connected to the first pressure sensor 33 and the other end connected to the second pressure sensor 34. The first pressure sensor 33 and the second pressure sensor 34 are a sensor that detects pressure inside the tube 32. The first pressure sensor 33 and the second pressure sensor 34 are an air pressure sensor that detects air pressure inside the tube 32.

As illustrated in FIGS. 30 and 32, the first pressure sensor 33 includes a case 331, a terminal 332, a sensor element 333, and a circuit board 334. The second pressure sensor 34 has a sensor configuration substantially the same as that of the first pressure sensor 33. Therefore, hereinafter, the first pressure sensor 33 will be described, and the description of the second pressure sensor 34 will be omitted.

The case 331 includes a case lid 331b that forms, together with a case main body 331a, an accommodation space for the sensor element 333 and the circuit board 334. The case main body 331a includes a board disposing portion 331c on which the sensor element 333 and the circuit board 334 are located, a connection port 331d to which one end of the tube 32 is connected, and a connector portion 331e in which the terminal 332 is accommodated. The connection port 331d is formed with a pressure introduction hole 331f that guides pressure inside the tube 32 to the sensor element 333. The pressure introduction hole 331f communicates with a space in which the sensor element 333 and the circuit board 334 are accommodated.

The terminal 332 outputs a sensor signal detected by the sensor element 333 to an outside. The terminal 332 is supported by the case main body 331a by being integrally molded with the case main body 331a by insert molding, for example.

The sensor element 333 includes a semiconductor element having a diaphragm that receives pressure inside the tube 32. The sensor element 333 is located together with the circuit board 334 in a space in the case 331 that communicates with the inside of the tube 32. The sensor element 333 is located on the circuit board 334.

The circuit board 334 is a board on which a signal processing circuit that performs amplification processing and the like on the sensor signal detected by the sensor element 333 is formed. The circuit board 334 is electrically connected to the terminal 332 via a conductive member such as solder.

In the detection unit 31, when the cushioning member CP is deformed together with the under panel UP due to occurrence of road surface interference, the tube 32 is pressed against the floor panel FP side and deformed due to the deformation of the cushioning member CP. At this time, a pressure change caused by the deformation of the tube 32 is detected by the first pressure sensor 33 and the second pressure sensor 34. For example, in the first pressure sensor 33, when a pressure change inside the tube 32 is detected by the sensor element 333, a signal corresponding to the pressure change inside the tube 32 is output from the sensor element 333. The signal output from the sensor element 333 is subjected to predetermined processing in the circuit board 334, and then output to the outside via the terminal 332.

Here, the tube 32 may be filled with a gas such as air as a pressure transmission medium, but when an external force is locally applied on the tube 32, a pressure change of the air is small, and it is difficult for the impact sensor 30 to appropriately detect impact applied to the vehicle V. In particular, when the impact sensor 30 is applied to a large in-vehicle device such as the battery pack BP, since a length of the tube 32 increases, a pressure change of the air with respect to an external force is small, and it is difficult for the impact sensor 30 to appropriately detect impact applied to the vehicle V.

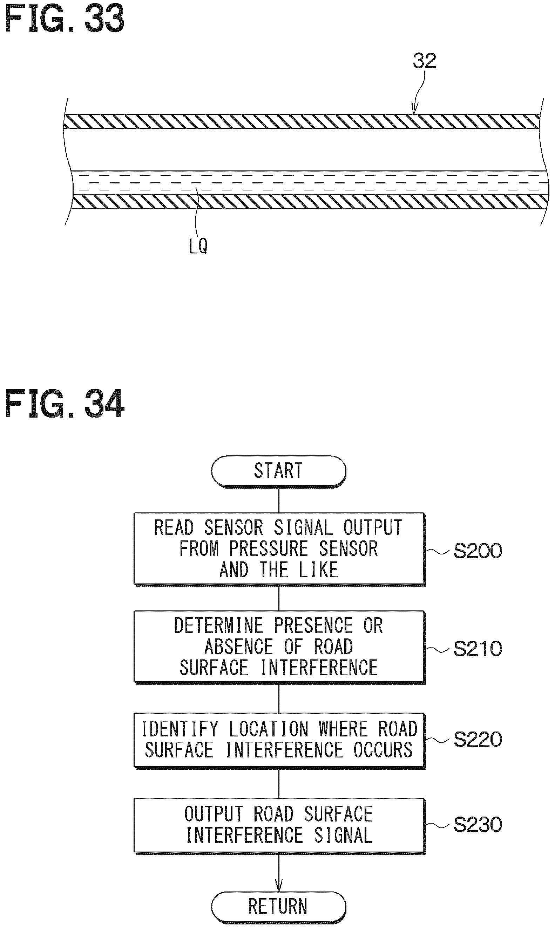

In consideration of this, as illustrated in FIG. 33, the tube 32 is filled with a liquid LQ as the pressure transmission medium in addition to a gas such as air. If the tube 32 is filled with the liquid LQ, which is a non-compressible liquid, the pressure change of the tube 32 can be increased with respect to the deformation of the tube 32.

A filling amount of the liquid LQ in the tube 32 is determined according to sensitivity required for the impact sensor 30. The filling amount of the liquid LQ is, for example, equal to or less than a maximum deformation amount of the tube 32 that is assumed in advance such that the liquid LQ hardly flows into the inside of the pressure sensors 33 and 34. In order to avoid a decrease in insulation property of the pressure sensors 33 and 34 due to the inflow of the liquid LQ, an insulating liquid having an electrical insulating property is used as the liquid LQ. Further, as the liquid LQ, a liquid that does not freeze within an operating temperature range of the vehicle V (that is, an antifreeze liquid) is adopted.

When the silicone tube 32 is filled with silicone oil as the liquid LQ, the tube 32 may swell due to the silicone oil, and the properties of the tube 32 may change. A change in properties of the tube 32 due to the filling with the liquid LQ may affect the sensitivity of the road surface interference sensor 10. Therefore, it is preferable to adopt the liquid LQ having a small influence on the properties of the tube 32. When the silicone tube 32 is used as in the present example, for example, fluorine-based oil can be adopted as the liquid LQ. As the liquid LQ, a liquid other than the fluorine-based oil may be adopted as long as the liquid has a small influence on the properties of the tube 32.

The sensor control unit 60 is implemented as a computer including an I/O device including a processor, a memory, and a communication unit. The first pressure sensor 33 and the second pressure sensor 34 are connected to the I/O device of the sensor control unit 60. The sensor control unit 60 is connected to the CAN. The sensor control unit 60 is connected to the battery management device BMS, the acceleration sensor GS, the top level control device UE, the display control device HMI, and the like via the CAN. The memory of the sensor control unit 60 is implemented with a non-transient tangible storage medium.

The sensor control unit 60 executes, according to a program stored in the memory, various types of processing including determination processing of determining presence or absence of road surface interference, identification processing of identifying a location where an external force is applied, and output processing of outputting a signal according to a pressure change inside the tube 32 to an outside.

The sensor control unit 60 includes a determination unit 61, an identification unit 62, and a signal output unit 63 as functional configurations implemented on the computer. The determination unit 61 is a functional configuration that determines the presence or absence of road surface interference. The identification unit 62 is a functional configuration that identifies a location in the tube 32 where the external force is applied. The signal output unit 63 is a functional configuration that outputs a signal according to a pressure change inside the tube 32 that is detected by each of the pressure sensors 33 and 34. Each functional configuration is merely a functional configuration set for convenience to facilitate understanding of the contents of the present disclosure. Therefore, even if these functional configurations are not actually implemented as subroutines or hardware, the requirements of the present disclosure can be satisfied as long as the predetermined functions or processing of the present disclosure can be implemented.

Next, an example of control processing executed by the sensor control unit 60 will be described with reference to FIG. 34. The control processing illustrated in FIG. 34 is executed by the sensor control unit 60 periodically or irregularly while the vehicle V is traveling, for example.

In step S200, the sensor control unit 60 reads sensor signals output from the pressure sensors 33 and 34, the acceleration sensor GS, and the like. The sensor control unit 50 reads a sensor output of the acceleration sensor GS via the CAN.

Subsequently, in step S210, the sensor control unit 60 determines the presence or absence of road surface interference based on an output of the pressure sensors 33 and 34 and an output of the acceleration sensor GS. For example, the sensor control unit 50 determines that the road surface interference occurs when the detected pressure from at least one of the pressure sensors 33 and 34 exceeds predetermined threshold pressure for road surface interference detection and the acceleration sensor GS detects acceleration in the up-down direction Dv that is equal to or greater than a certain level. The sensor control unit 50 determines that the road surface interference does not occur when the detected pressure from both the pressure sensors 33 and 34 is equal to or less than the predetermined threshold pressure or when the acceleration sensor GS does not detect the acceleration in the up-down direction Dv that is equal to or greater than a certain level.

Subsequently, in step S220, the sensor control unit 60 identifies a location where the road surface interference occurs. The sensor control unit 60 of the present example identifies, based on a time lag of the pressure detection by each of the pressure sensors 33 and 34, a location in the tube 32 where the external force is applied. For example, when one of the pressure sensors 33 and 34 detects pressure earlier than the other sensor, the sensor control unit 60 identifies a side of the tube 32 that is closer to the one sensor than the other sensor as the location where the external force is applied.

The processing in step S220 is performed on a premise that the road surface interference is detected. Therefore, when the road surface interference is not detected in step S210, the sensor control unit 60 skips the determination processing in step S220.

Subsequently, when the road surface interference is detected, the sensor control unit 60 outputs a road surface interference signal indicating that the road surface interference is detected to the battery management device BMS, the top level control device UE, the display control device HMI, and the like via the CAN. When the road surface interference is detected, the battery management device BMS performs, for example, abnormality diagnosis of the assembled battery CS. When the road surface interference is detected, the top level control device UE operates, for example, an automatic brake to restrict driving of the vehicle V. When the road surface interference is detected, the display control device HMI displays, for example, a location where an external force is applied, or notifies a message prompting confirmation of the location.

The road surface interference sensor 10 described above includes the detection unit 31 that is located below the floor panel FP of the vehicle V and detects the external force applied to the vehicle V from the side of the road surface RS. The detection unit 31 includes the flexible hollow tube 32 and the pressure sensors 33 and 34 that detect the pressure inside the tube 32, and the liquid LQ is sealed inside the tube 32 as the pressure transmission medium.

In this way, if the liquid LQ is sealed inside the tube 32, the air inside tube 32 is reduced, and thus even if the deformation of tube 32 is localized, the external force applied to vehicle V from the side of the road surface RS can be appropriately detected.

In particular, the road surface interference sensor 10 of the present example has a redundant sensor configuration in which the pressure change inside the tube 32 is detected by the first pressure sensor 33 and the second pressure sensor 34. According to this, even if one of the first pressure sensor 33 and the second pressure sensor 34 fails, the presence or absence of the road surface interference can be determined.

The road surface interference sensor 10 of the present example has the following features.

(1) The liquid LQ is an insulating fluid that has an electrical insulating property. According to this, a decrease in insulation property of the road surface interference sensor 10 due to the sealing of the liquid inside the tube 32 can be avoided.
(2) The road surface interference sensor 10 includes the determination unit 61 that determines the presence or absence of the road surface interference. The acceleration sensor GS as the physical quantity detection unit that detects a physical quantity changing due to the road surface interference is installed on the vehicle V separately from the detection unit 31. The determination unit 61 determines the presence or absence of the road surface interference based on the output of the detection unit 31 and the output of the acceleration sensor GS. According to this, as compared with the case where the presence or absence of the road surface interference is determined only by the output of the detection unit 31, erroneous detection of the road surface interference due to malfunction of the detection unit 31 can be reduced, and thus determination accuracy of the road surface interference can be improved.
(3) The signal according to the external force applied to the vehicle V is output to the outside via the communication network of the vehicle V. According to this, the external force applied on the vehicle V can be detected while reducing the number of I/O ports at the signal output destination.
(4) The cushioning member CP is located between the road surface RS and the underfloor device installed below the floor panel FP. At least a portion of the detection unit 31 is embedded in the cushioning member CP. As described above, when at least a portion of the detection unit 31 is embedded in the cushioning member CP, the sensor sensitivity of the road surface interference sensor 10 can be optimized by adjusting the magnitude of the external force applied to the tube 32 of the detection unit 31 while protecting the detection unit 31 by the cushioning member CP.
(5) The underfloor device is the power storage unit BU including the plurality of battery cells C. According to this, since the impact applied to the power storage unit BU can be grasped based on the output of the road surface interference sensor 10, it is easy to implement a measure against a problem caused by the impact on the assembled battery CS.
(6) The detection unit 31 is located such that at least a portion of the detection unit 31 overlaps two or more battery cells C in the up-down direction Dv. According to this, the impact on the plurality of battery cells C can be detected by the single detection unit 31. This greatly contributes to simplification of the sensor configuration of the road surface interference sensor 10.

### [Modifications of Pressure Sensors 33A and 34A]

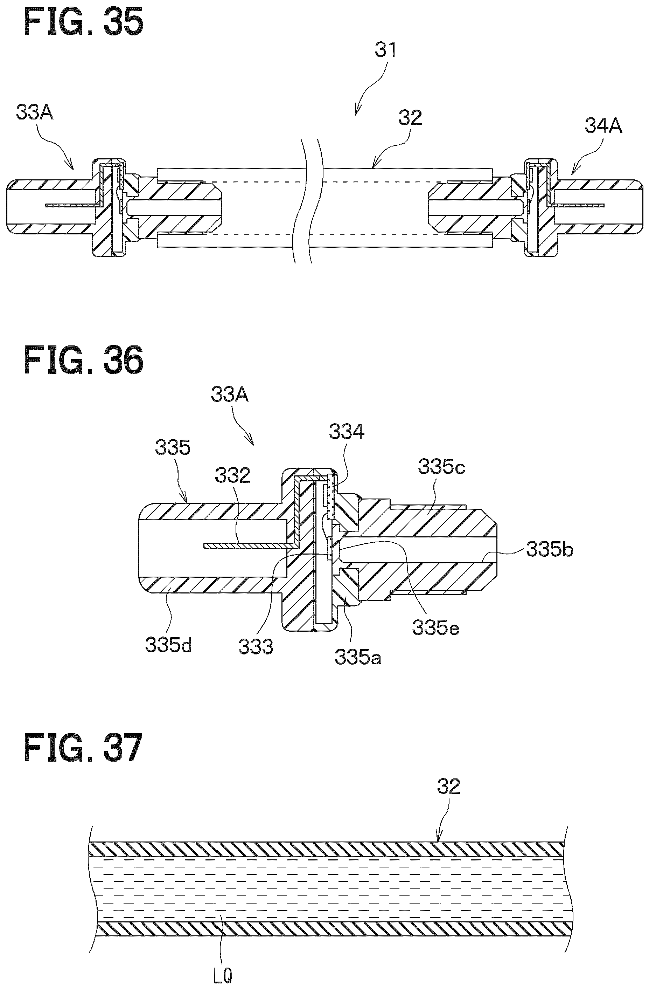

Modifications of pressure sensors 33A and 34A will be described with reference to FIGS. 35 to 37. The pressure sensors 33A and 34A each include a hydraulic pressure sensor having resistance to the liquid LQ sealed in the tube 32.

As illustrated in FIGS. 35 and 36, the first pressure sensor 33A includes a case 335, the terminal 332, the sensor element 333, and the circuit board 334. The second pressure sensor 34A has a sensor configuration substantially the same as that of the first pressure sensor 33A. Therefore, hereinafter, the first pressure sensor 33A will be described, and the description of the second pressure sensor 34A will be omitted.

The case 335 includes a board disposing portion 335a on which the sensor element 333 and the circuit board 334 are located, a connection port 335c formed with a pressure introduction hole 335b, and a connector portion 335d including the terminal 332. The board disposing portion 335a forms, together with the connector portion 335d, an accommodation space for the sensor element 333 and the circuit board 334. The connection port 335c is connected to the board disposing portion 335a on a side opposite to the connector portion 335d. The connection port 335c is formed with the bottomed pressure introduction hole 335b communicating with the inside of the tube 32. The connection port 335c is formed with a thin diaphragm portion 335e at a bottom of the pressure introduction hole 335b. The sensor element 333 is located on the diaphragm portion 335e on a side opposite to the pressure introduction hole 335b. When the diaphragm portion 335e is deformed due to a pressure change inside the tube 32, the sensor element 333 outputs a signal according to a deformation amount of the diaphragm portion 335e.

In the first pressure sensor 33A having the above configuration, the accommodation space for the sensor element 333 and the circuit board 334 and the pressure introduction hole 335b are separated by the diaphragm portion 335e. Accordingly, the first pressure sensor 33A is ensured to be resistant to the liquid LQ sealed in the tube 32. According to this, a decrease in insulation property of the road surface interference sensor 10 due to the sealing of the liquid LQ inside the tube 32 can be avoided.

Since each of the pressure sensors 33A, 34A in the present example is ensured to be resistant to the liquid LQ sealed in the tube 32, for example, as illustrated in FIG. 37, the inside of the tube 32 can be filled with only the liquid LQ.

### [Modification of Sensor Configuration]

The road surface interference sensor 10 is not limited to that illustrated in the above-described embodiment. The road surface interference sensor 10 can be variously modified as follows, for example.

### [First Modification]

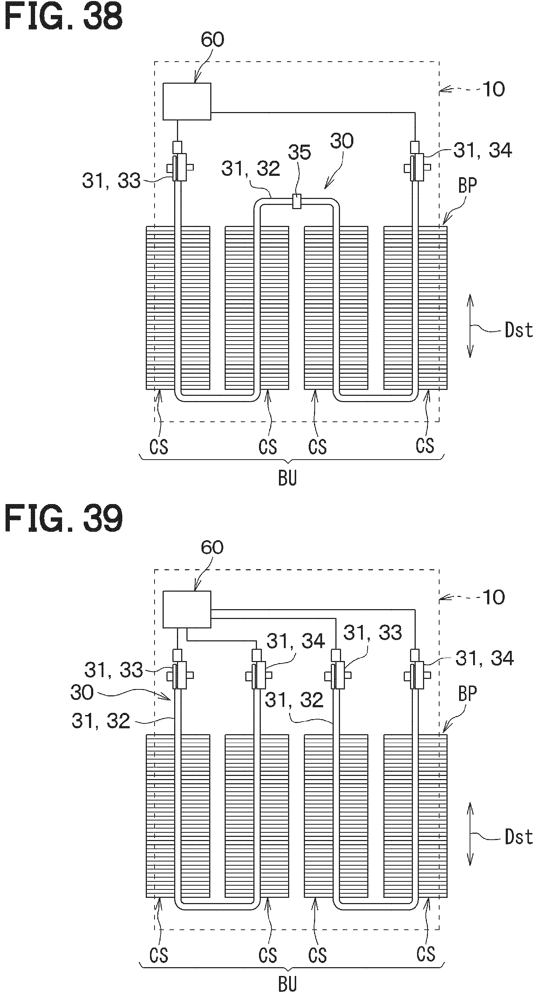

In the road surface interference sensor 10, for example, as illustrated in FIG. 38, a portion of the tube 32 may be closed by a closing member 35 such that each of the pressure sensors 33 and 34 functions independently. According to this, by dividing the tube 32 into two by the closing member 35, sensitivity of each of the pressure sensors 33 and 34 to a pressure change can be increased.

### [Second Modification]

For example, as illustrated in FIG. 39, the road surface interference sensor 10 may detect, by a plurality of detection units 31, an external force applied to the vehicle V due to road surface interference. In the example illustrated in FIG. 39, the plurality of detection units 31 detect different assembled batteries CS, but may detect a common assembled battery CS.

### [Third Modification]

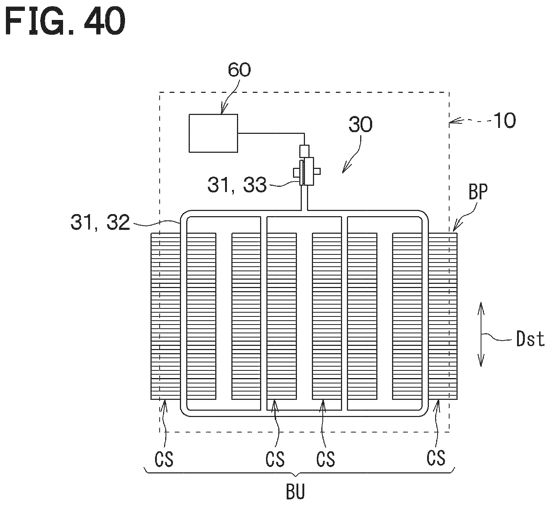

For example, as illustrated in FIG. 40, the road surface interference sensor 10 may be configured such that the detection unit 31 only includes the first pressure sensor 33 connected to the tube 32 formed in a loop shape. In the example illustrated in FIG. 40, the tube 32 has a loop shape, but this is not essential.

### [Fourth Modification]

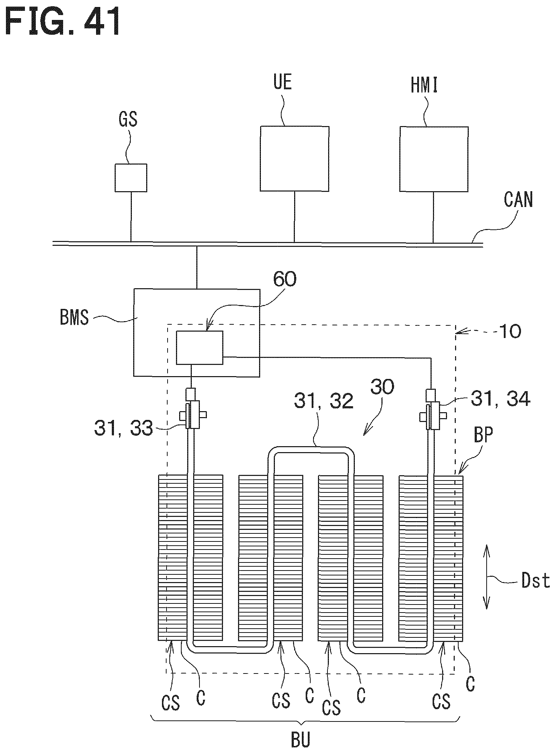

For example, as illustrated in FIG. 41, the road surface interference sensor 10 may be configured such that the sensor control unit 60 is integrated with the battery management device BMS as one functional configuration of the battery management device BMS. In this case, the road surface interference sensor 10 may output a signal from the detection unit 31 as an analog signal or a digital signal to the battery management device BMS. The sensor control unit 60 may be integrated with a control device different from the battery management device BMS. The sensor control unit 60 is not essential and may be omitted.

### [Fifth Modification]

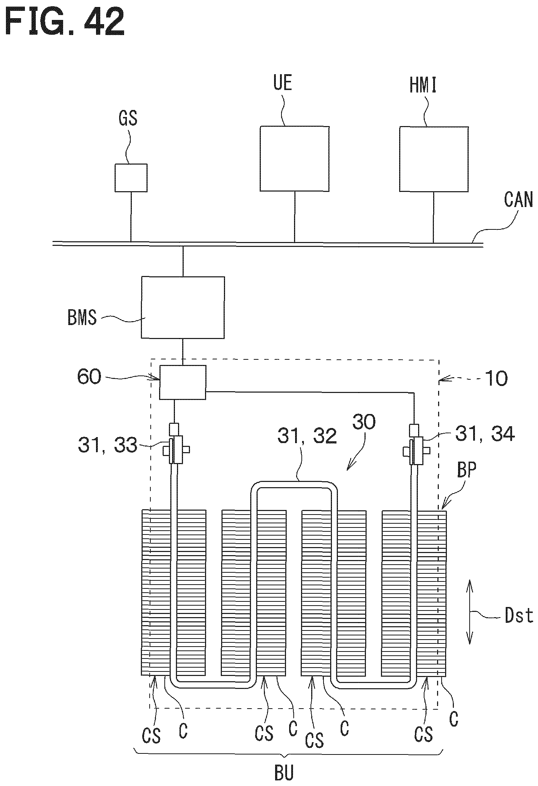

In the road surface interference sensor 10, for example, as illustrated in FIG. 42, the sensor control unit 60 may be configured separately from the battery management device BMS, and the sensor control unit 60 may be connected to the CAN via the battery management device BMS.

Although not illustrated, for example, the acceleration sensor GS may be directly connected to the sensor control unit 60 of the road surface interference sensor 10, or may be connected to the CAN via another device such as the battery management device BMS.

### [Other Modifications]

The pressure sensors 33 and 34 used in the impact sensor 30 are an example. The pressure sensors 33 and 34 may be partially different from those described above. The same applies to the pressure sensors 33A and 34A illustrated in the modification.

It is preferable to adopt an insulating fluid as the liquid LQ, but the present disclosure is not limited thereto. For example, a conductive fluid (for example, a water-soluble liquid) may be adopted as the liquid LQ as long as insulation is ensured in the pressure sensors 33 and 34.

It is preferable that the road surface interference sensor 10 includes the identification unit 62 that identifies the location where the road surface interference occurs, but the present disclosure is not limited thereto. For example, the identification unit 62 may be omitted from the road surface interference sensor 10.

It is preferable that the road surface interference sensor 10 includes the determination unit 61 that determines the presence or absence of the road surface interference, but present disclosure is not limited thereto. For example, the determination unit 61 may be omitted from the road surface interference sensor 10, and the road surface interference sensor 10 may be configured to simply detect the external force applied on the vehicle V due to the road surface interference.

In the road surface interference sensor 10, the detection unit 31 may not be embedded in the cushioning member CP. It is preferable that the detection unit 31 is located such that at least a portion of the detection unit 31 extends along the arrangement direction Dst of the battery cells C forming the assembled battery CS, but the present disclosure is not limited thereto. The detection unit 31 may be located to extend along a direction orthogonal to the arrangement direction Dst of the battery cells C forming the assembled battery CS. The detection unit 31 may be located not to overlap the battery cell C in the up-down direction Dv.

The vehicle V to which the road surface interference sensor 10 is applied is not limited to those described above. The road surface interference sensor 10 is also applicable to the vehicle V driven by an internal combustion engine, the vehicle V in which the under panel UP is omitted, and the like. The road surface interference sensor 10 may be configured to detect impact applied to the power storage unit BU, but may also be configured to detect impact applied to an underfloor device other than the power storage unit BU. The plurality of battery cells C forming the power storage unit BU are bound as the assembled battery CS by a binding band or the like, but this is not essential.

### [Third Technical Idea]

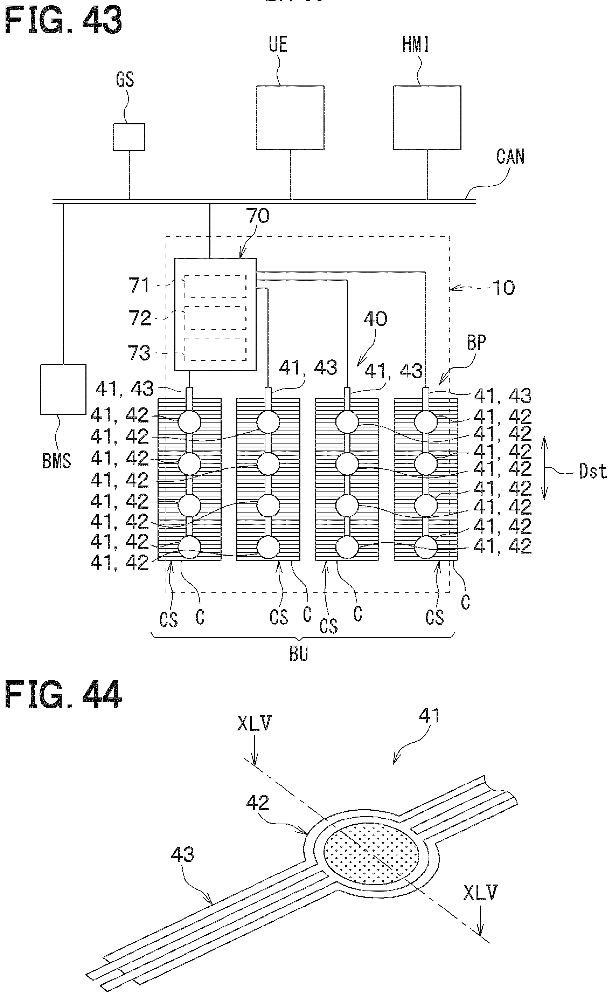

In a third technical idea, an external force applied to the vehicle V from a side of the road surface RS is detected using the road surface interference sensor 10 including a contact sensor 40 that detects presence or absence of contact between a first electrode sheet 413 and a second electrode sheet 414. Hereinafter, an embodiment of the third technical idea will be described with reference to FIGS. 43 to 49.

As illustrated in FIG. 43, the road surface interference sensor 10 includes a plurality of contact sensors 40 and a sensor control unit 70. Specifically, the road surface interference sensor 10 is provided with the same number of detection units 41 as the number of assembled batteries CS. The road surface interference sensor 10 is connected to a CAN which is a communication network of the vehicle V, and a signal according to the presence or absence of the contact between the first electrode sheet 413 and the second electrode sheet 414 to be described later is output to an outside via the CAN.

The contact sensor 40 includes a plurality of detection units 41 that detect the external force applied to the vehicle V from the side of the road surface RS. Each of the plurality of detection units 41 has the same configuration. Hereinafter, a representative one of the plurality of detection units 41 will be described in detail, and description of the others will be omitted.

As illustrated in FIG. 44, the detection unit 41 includes a plurality of contact switches 42, and a conduction portion 43 that connects the contact switch 42 to the adjacent contact switch 42 or to the sensor control unit 70. In the detection unit 41, the plurality of contact switches 42 are electrically connected in parallel via the conduction portion 43. In the detection unit 41, a portion forming the contact switch 42 has a circular shape, and a portion forming the conduction portion 43 has a rectangular shape.

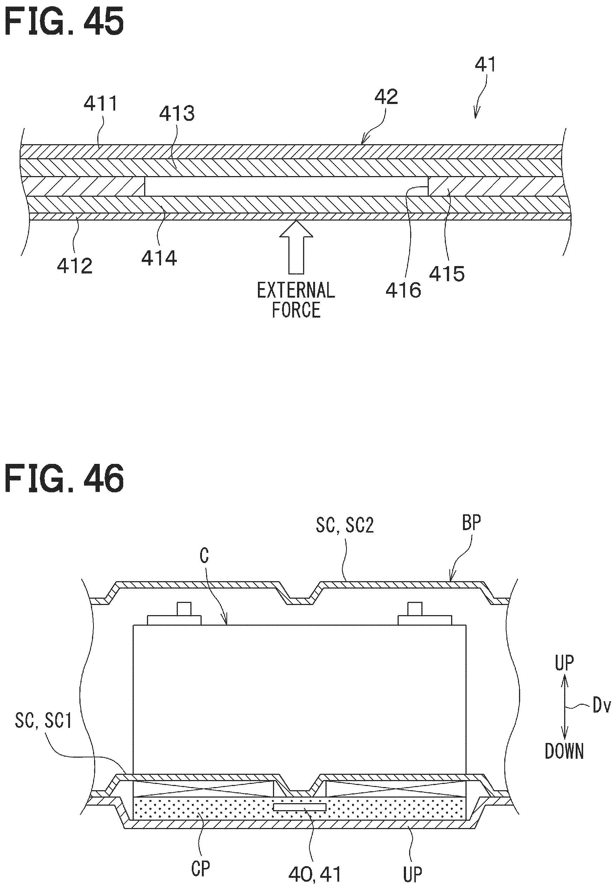

Specifically, as illustrated in FIG. 45, the detection unit 41 is formed in a sheet shape. The detection unit 41 includes a first outer sheet 411, a second outer sheet 412, the first electrode sheet 413, the second electrode sheet 414, and a spacer 415. The detection unit 41 is implemented as a laminate in which the first outer sheet 411, the first electrode sheet 413, the spacer 415, the second electrode sheet 414, and the second outer sheet 412 are laminated in this order.

The first outer sheet 411 and the second outer sheet 412 are made of a thin-film resin material having an electrical insulating property. The first outer sheet 411 and the second outer sheet 412 are made of, for example, polyethylene naphthalate resin.

The first electrode sheet 413 and the second electrode sheet 414 are made of a thin-film conductive material. The first electrode sheet 413 and the second electrode sheet 414 are each formed, for example, of a silver layer covered with a carbon layer. The first electrode sheet 413 and the second electrode sheet 414 are bonded to the first outer sheet 411 and the second outer sheet 412 so as to face each other.

The first electrode sheet 413 is bonded to an inner surface of the first outer sheet 411 that faces the second outer sheet 412. The second electrode sheet 414 is bonded to an inner surface of the second outer sheet 412 that faces the first outer sheet 411.

The spacer 415 is made of a thin-film resin material having an electrical insulating property. The spacer 415 is made of, for example, polyethylene naphthalate resin. In the spacer 415, a through hole 416 is formed in a portion forming the contact switch 42. Accordingly, the first electrode sheet 413 and the second electrode sheet 414 can be brought into direct contact with each other at the portion forming the contact switch 42.

The detection unit 41 is located to overlap two or more battery cells C in the up-down direction Dv. The detection unit 41 of the present example is located below the assembled battery CS so as to extend along the arrangement direction Dst of the battery cells C. The detection unit 41 is located in a posture in which a thickness direction thereof is the up-down direction Dv such that the detection unit 41 can be easily located in a gap between a bottom of the case main body SC1 and the under panel UP. In other words, when a direction in which the first electrode sheet 413 and the second electrode sheet 414 face each other is defined as an electrode facing direction, the detection unit 41 is located between the road surface RS and an underfloor device installed below the floor panel FP in a posture in which the electrode facing direction intersects a lower surface of the underfloor device. The electrode facing direction coincides with the thickness direction of the detection unit 41.

Specifically, as illustrated in FIG. 46, at least a portion of the detection unit 41 is embedded in the assembled battery CS and the cushioning member CP. The detection unit 41 may be embedded in an embedding groove or notch provided in the cushioning member CP, or may be sandwiched between two cushioning members CP. The detection unit 41 may be embedded in the cushioning member CP in such a manner that a portion of the detection unit 41 is exposed to an outside of the cushioning member CP.

The detection unit 41 configured as described above outputs a potential difference between the first electrode sheet 413 and the second electrode sheet 414 forming the contact switch 42 as a signal indicating the presence or absence of the contact between the electrode sheets 413 and 414. In the detection unit 41, when the electrode sheets 413 and 414 forming the contact switch 42 come into contact with each other due to an external force in a state where electric power is supplied from a constant voltage source to one of the electrode sheets 413 and 414, the potential difference between the electrode sheets 413 and 414 becomes small. Accordingly, the contact sensor 40 can detect the external force based on the presence or absence of the contact between the electrode sheets 413 and 414 in the contact switch 42.

The sensor control unit 70 is implemented as a computer including an I/O device including a processor, a memory, and a communication unit. A plurality of detection units 41 are connected to the I/O device of the sensor control unit 70. The sensor control unit 70 is connected to the CAN. The sensor control unit 70 is connected to the battery management device BMS, the acceleration sensor GS, the top level control device UE, the display control device HMI, and the like via the CAN. The memory of the sensor control unit 70 is implemented with a non-transient tangible storage medium.

The sensor control unit 70 executes, according to a program stored in the memory, various types of processing including determination processing of determining presence or absence of road surface interference, identification processing of identifying a location where an external force is applied, output processing of outputting a signal according to presence or absence of contact between the electrode sheets 413 and 414 to an outside, and the like.

The sensor control unit 70 includes a determination unit 71, an identification unit 72, and a signal output unit 73 as functional configurations implemented on the computer. The determination unit 71 is a functional configuration that determines the presence or absence of road surface interference. The identification unit 72 is a functional configuration that identifies a location where the road surface interference occurs. The signal output unit 73 is a functional configuration that outputs a signal according to the presence or absence of contact between the electrode sheets 413 and 414. Each functional configuration is merely a functional configuration set for convenience to facilitate understanding of the contents of the present disclosure. Therefore, even if these functional configurations are not actually implemented as subroutines or hardware, the requirements of the present disclosure can be satisfied as long as the predetermined functions or processing of the present disclosure can be implemented.

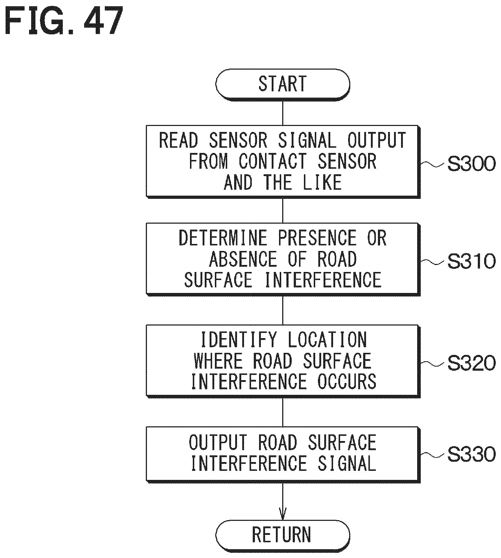

Next, an example of control processing executed by the sensor control unit 70 will be described with reference to FIG. 47. The control processing illustrated in FIG. 47 is executed by the sensor control unit 70 periodically or irregularly while the vehicle V is traveling, for example.

In step S300, the sensor control unit 70 reads sensor signals output by the contact sensor 40, the acceleration sensor GS, and the like. The sensor control unit 70 reads a sensor output of the acceleration sensor GS via the CAN.

Subsequently, in step S310, the sensor control unit 70 determines the presence or absence of the road surface interference based on outputs of the plurality of detection units 41 forming the contact sensor 40 and an output of the acceleration sensor GS. For example, the sensor control unit 70 determines that the road surface interference occurs when an output voltage of at least one of the plurality of detection units 41 falls below a predetermined threshold voltage for road surface interference detection and the acceleration sensor GS detects acceleration in the up-down direction Dv that is equal to or greater than a certain level. The sensor control unit 70 determines that the road surface interference does not occur when the output voltage of each of the plurality of detection units 41 is equal to or higher than the threshold voltage for road surface interference detection or when the acceleration sensor GS does not detect the acceleration in the up-down direction Dv that is equal to or greater than a certain level.

Subsequently, in step S320, the sensor control unit 70 identifies one of the plurality of detection units 41 that has detected the external force. The sensor control unit 70 uses the fact that the output voltage of the detection unit 41 decreases when an external force is applied, and identifies, based on the output voltage of each detection unit 41, one of the plurality of detection units 41 that has detected the external force.

Here, the processing in step S320 is performed on a premise that the road surface interference is detected. Therefore, when the road surface interference is not detected in step S310, the sensor control unit 70 skips the determination processing in step S320.

Subsequently, when the road surface interference is detected, the sensor control unit 70 outputs a road surface interference signal indicating that the road surface interference is detected to the battery management device BMS, the top level control device UE, the display control device HMI, and the like via the CAN. When the road surface interference is detected, the battery management device BMS performs, for example, abnormality diagnosis of the assembled battery CS. When the road surface interference is detected, the top level control device UE operates, for example, an automatic brake to restrict driving of the vehicle V. When the road surface interference is detected, the display control device HMI displays, for example, a location where an external force is applied, or notifies a message prompting confirmation of the location.

The road surface interference sensor 10 described above includes the detection unit 41 that is located below the floor panel FP of the vehicle V and detects the external force applied to the vehicle V from the side of the road surface RS. The detection unit 41 includes the sheet-shaped contact switch 42 including the first electrode sheet 413 and the second electrode sheet 414 located to face the first electrode sheet 413 with a predetermined gap therebetween. The detection unit 41 detects the external force applied to the vehicle V based on the presence or absence of the contact between the first electrode sheet 413 and the second electrode sheet 414 in the contact switch 42.

As described in **Patent Literature** 1, when detecting, as an external force, the pressure change of air inside the tube due to the deformation of the tube, if the deformation of the tube is localized, the pressure change of air is small, and it is difficult to appropriately detect the impact.

On the other hand, when detecting the external force based on the presence or absence of the contact between the electrode sheets 413 and 414, the external force applied to the vehicle V from the road surface RS side can be appropriately detected even if the external force is locally applied. In particular, the road surface interference sensor 10 of the present example has excellent mountability on the vehicle V since it is not necessary to secure a space for installing the pressure sensors at both ends of the tube as in **Patent Literature** 1.

The road surface interference sensor 10 of the present example has the following features.

(1) When a direction in which the first electrode sheet 413 and the second electrode sheet 414 face each other is defined as an electrode facing direction, the detection unit 41 is located between the road surface RS and an underfloor device installed below the floor panel FP in a posture in which the electrode facing direction intersects a lower surface of the underfloor device. According to this, the first electrode sheet 413 and the second electrode sheet 414 are located between the underfloor device and the road surface RS in an overlapping state. Therefore, the external force applied from the side of the road surface RS toward the underfloor device can be appropriately detected.
(2) The cushioning member CP is located between the road surface RS and the underfloor device installed below the floor panel FP. At least a portion of the detection unit 41 is embedded in the cushioning member CP. As described above, when at least a portion of the detection unit 41 is embedded in the cushioning member CP, the sensor sensitivity of the road surface interference sensor 10 can be optimized by adjusting a magnitude of the external force applied to the contact switch 42 of the detection unit 41 while protecting the detection unit 41 by the cushioning member CP.
(3) The road surface interference sensor 10 includes the determination unit 71 that determines the presence or absence of the road surface interference. The acceleration sensor GS as the physical quantity detection unit that detects a physical quantity changing due to the road surface interference is installed on the vehicle V separately from the detection unit 41. The determination unit 71 determines the presence or absence of the road surface interference based on the output of the detection unit 41 and the output of the acceleration sensor GS installed in the vehicle V. According to this, as compared with the case where the presence or absence of the road surface interference is determined only by the output of the detection unit 41, erroneous detection of the road surface interference due to malfunction of the detection unit 41 can be reduced, and thus determination accuracy of the road surface interference can be improved.
(4) The signal according to the external force applied to the vehicle V is output to the outside via the communication network of the vehicle V. According to this, the external force applied on the vehicle V can be detected while reducing the number of I/O ports at the signal output destination.
(5) The underfloor device is the power storage unit BU including the plurality of battery cells C. According to this, since the impact applied to the power storage unit BU can be grasped based on the output of the road surface interference sensor 10, it is easy to implement a measure against a problem caused by the impact on the power storage unit BU.
(6) The detection unit 41 is located such that at least a portion of the detection unit 41 overlaps two or more battery cells C in the up-down direction Dv. According to this, the impact on the plurality of battery cells C can be detected by the single detection unit 41. This greatly contributes to simplification of the sensor configuration of the road surface interference sensor 10.

### [Modification of Sensor Configuration]

The road surface interference sensor 10 is not limited to that illustrated in the above-described embodiment. The road surface interference sensor 10 can be variously modified as follows, for example.

### [First Modification]

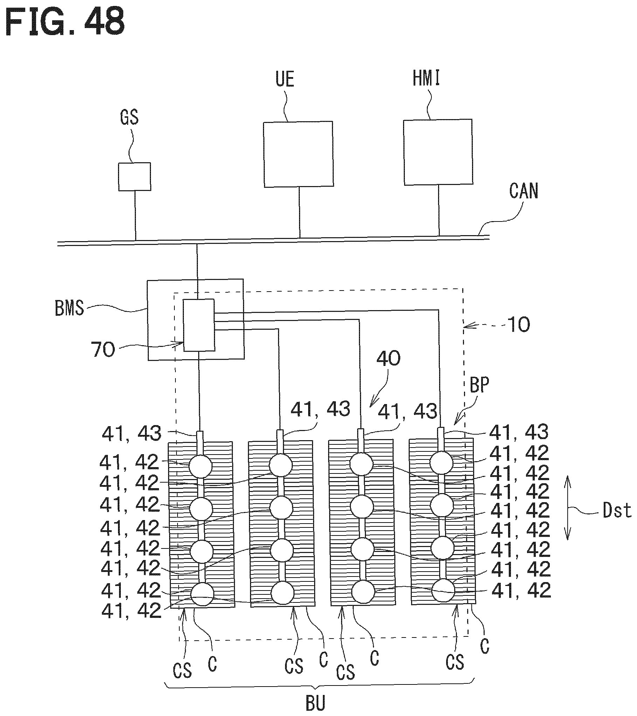

For example, as illustrated in FIG. 48, the road surface interference sensor 10 may be configured such that the sensor control unit 70 is integrated with the battery management device BMS as one functional configuration of the battery management device BMS. In this case, the road surface interference sensor 10 may output a signal from the detection unit 41 as an analog signal to the battery management device BMS. The sensor control unit 70 may be integrated with a control device different from the battery management device BMS. The sensor control unit 70 is not essential and may be omitted.

### [Second Modification]

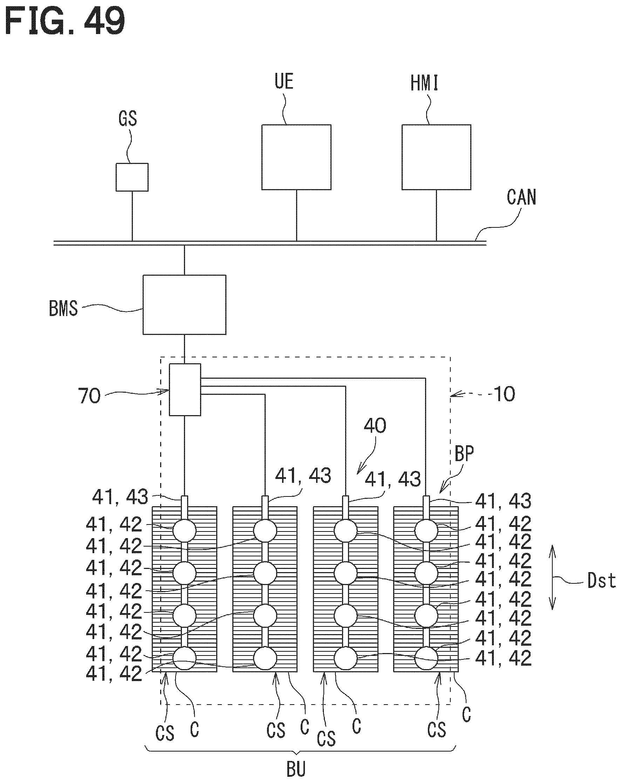

In the road surface interference sensor 10, for example, as illustrated in FIG. 49, each of the plurality of detection units 41 may be connected to the sensor control unit 70, and the sensor control unit 70 may be connected to the CAN via the battery management device BMS.

For example, the road surface interference sensor 10 may be configured such that the sensor control unit 70 is integrated with the battery management device BMS, and each of the plurality of detection units 41 is connected to the battery management device BMS.

For example, the acceleration sensor GS may be directly connected to the sensor control unit 70 of the road surface interference sensor 10. The acceleration sensor GS may be connected to the CAN via another device such as the battery management device BMS.

### [Third Modification]

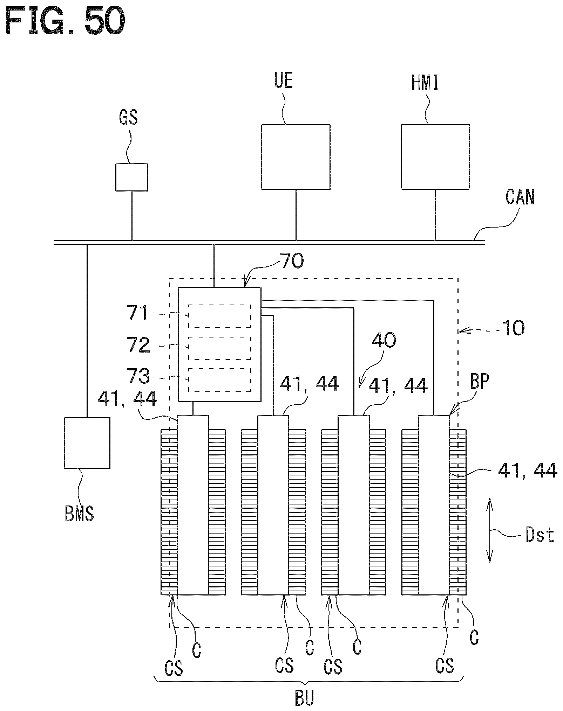

The detection unit 41 of the above-described embodiment includes the circular contact switch 42 and the rectangular conduction portion 43, but the present disclosure is not limited thereto. For example, as illustrated in FIG. 50, the detection unit 41 may include a rectangular contact switch 44.

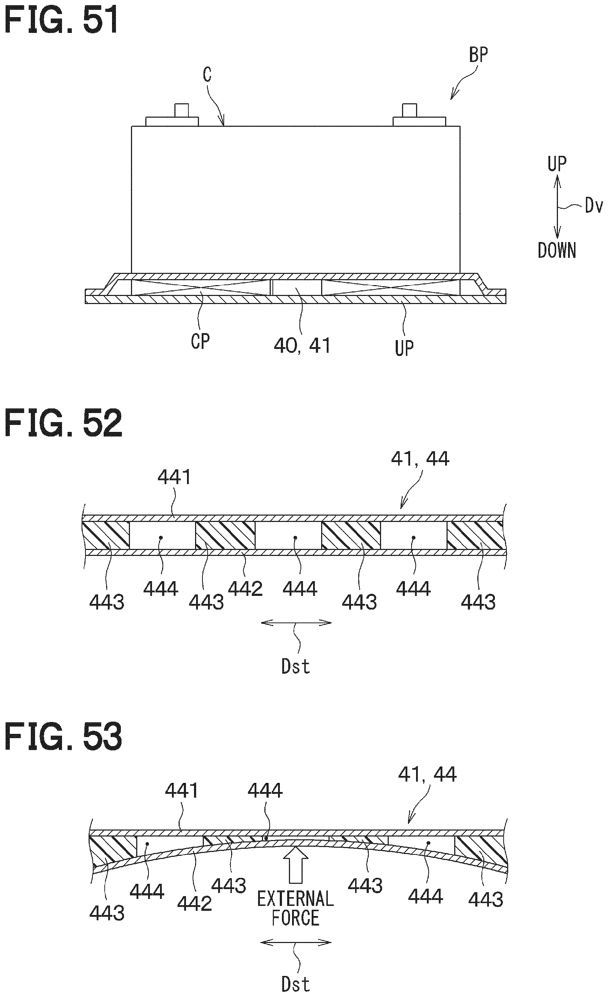

As illustrated in FIG. 51, a dimension of the contact switch 44 of the present example in a lateral direction in a plan view is sufficiently larger than a thickness of the contact switch 44 such that an external force detection range is expanded. The contact switch 44 is configured to be thin (for example, about 1 mm to 2 mm) so as to be able to be located in a gap between the lid SC2 of the accommodation case SC and the under panel UP.

As illustrated in FIG. 52, the contact switch 44 includes a first electrode sheet 441, a second electrode sheet 442, and an insulating material 443. The contact switch 44 is implemented as a laminate in which the first electrode sheet 441, the insulating material 443, and the second electrode sheet 442 are laminated in this order.

The first electrode sheet 441 and the second electrode sheet 442 are made of a thin-film conductive material. The first electrode sheet 441 and the second electrode sheet 442 are each formed, for example, of a silver layer covered with a carbon layer. The first electrode sheet 441 and the second electrode sheet 442 are connected to each other via a plurality of insulating materials 443.

Between the first electrode sheet 441 and the second electrode sheet 442, the plurality of insulating materials 443 extending in a lateral direction of the contact switch 44 are located side by side at intervals in a longitudinal direction of the contact switch 44. A disposition interval of the plurality of insulating materials 443 is appropriately set according to a detection target assumed in advance.

A thickness of the insulating material 443 is sufficiently larger than thicknesses of the first electrode sheet 441 and the second electrode sheet 442. The insulating material 443 of the present example functions as a spacer that defines an interval between the first electrode sheet 441 and the second electrode sheet 442 in a void portion 444 where the insulating material 443 is not provided. The insulating material 443 is joined to the first electrode sheet 441 and the second electrode sheet 442 with an adhesive or a double-sided tape.

The insulating material 443 is elastically deformable in a thickness direction thereof. The insulating material 443 is made of a sponge-shaped resin material having an electrical insulating property. Accordingly, when the insulating material 443 is compressed in the thickness direction, the first electrode sheet 441 and the second electrode sheet 442 can directly come into contact with each other in the void portion 444. The insulating material 443 may be made of a rubber material.

For example, as illustrated in FIG. 53, the contact switch 44 configured as described above is compressed when an external force is applied, and the external force is detected by the contact between the first electrode sheet 441 and the second electrode sheet 442.

The contact switch 44 of the present example does not have a hollow space like the tubular pressure sensor 20, and has a three-layer structure including the electrode sheets 441 and 442 and the insulating material 443. According to this, the contact switch 44 can be configured to be thinner than the pressure sensor 20. When attempting to make the tubular pressure sensor 20 thinner, there is a trade-off in that a range in which the external force can be detected becomes narrower. However, with the contact switch 44, no such trade-off occurs. That is, the contact switch 44 of the present example has an advantage that the thickness can be reduced while securing the detection range of the external force. This greatly contributes to improvement in mountability.

Since the insulating material 443 is formed of a member capable of absorbing impact such as sponge, it is not necessary to separately provide a cushioning material. This greatly contributes to simplification of the contact switch 44.

An example in which in the contact switch 44 of the present example, the insulating material 443 functions as the spacer that defines the interval between the first electrode sheet 441 and the second electrode sheet 442 in the void portion 444 has been described, but the present disclosure is not limited thereto.

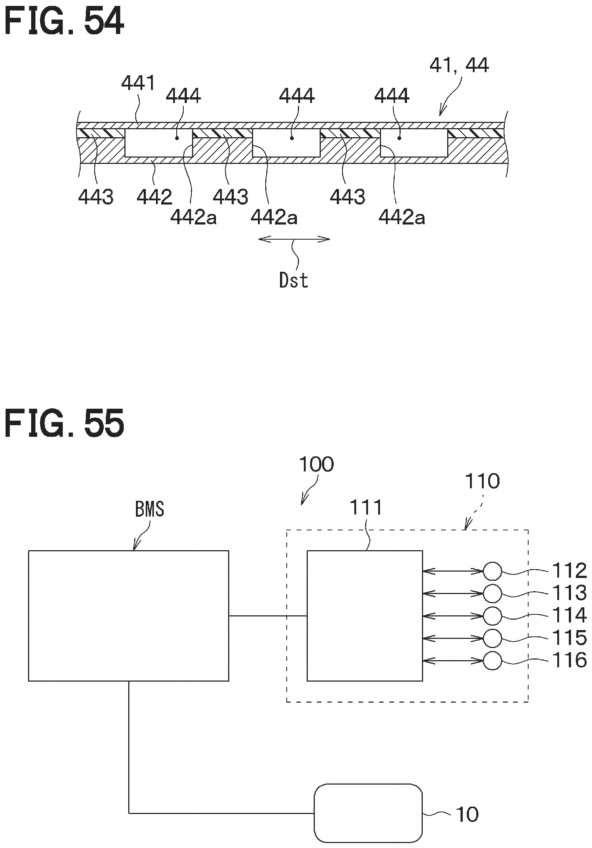

In the contact switch 44, for example, as illustrated in FIG. 54, the interval between the first electrode sheet 441 and the second electrode sheet 442 in the void portion 444 may be defined by a recess 442a formed away from the first electrode sheet 441 with respect to the second electrode sheet 442. The interval between the first electrode sheet 441 and the second electrode sheet 442 in the void portion 444 may be defined by a recess formed away from the second electrode sheet 442 with respect to the first electrode sheet 441.

### [Other Modifications]

Each detection unit 41 used in the contact sensor 40 is an example. Each detection unit 41 may be partially different from those described above. At least a portion of the detection unit 41 may be located between the road surface RS and an underfloor device installed below the floor panel FP in a posture in which the electrode facing direction is parallel to a lower surface of the underfloor device.

It is preferable that the road surface interference sensor 10 includes the determination unit 71 that determines the presence or absence of the road surface interference, but present disclosure is not limited thereto. For example, the determination unit 71 may be omitted from the road surface interference sensor 10, and the road surface interference sensor 10 may be configured to simply detect the external force applied on the vehicle V due to the road surface interference. The road surface interference sensor 10 may be configured to determine the presence or absence of road surface interference based only on the output of the detection unit 21, for example.

The road surface interference sensor 10 may output a signal according to an external force applied on the vehicle V to the outside by a method other than the communication network of the vehicle V. In the road surface interference sensor 10, the detection unit 41 may not be embedded in the cushioning member CP. It is preferable that the detection unit 41 is located such that at least a portion of the detection unit 41 extends along the arrangement direction Dst of the battery cells C forming the assembled battery CS, but the present disclosure is not limited thereto. The detection unit 41 may be located to extend along a direction orthogonal to the arrangement direction Dst of the battery cells C forming the assembled battery CS. The detection unit 21 may be located not to overlap the battery cell C in the up-down direction Dv.

The vehicle V to which the road surface interference sensor 10 is applied is not limited to those described above. The road surface interference sensor 10 is also applicable to the vehicle V driven by an internal combustion engine, the vehicle V in which the under panel UP is omitted, and the like. The road surface interference sensor 10 may be configured to detect impact applied to the power storage unit BU, but may also be configured to detect impact applied to an underfloor device other than the power storage unit BU. The plurality of battery cells C forming the power storage unit BU are bound as the assembled battery CS by a binding band or the like, but this is not essential.

### [Fourth Technical Idea]

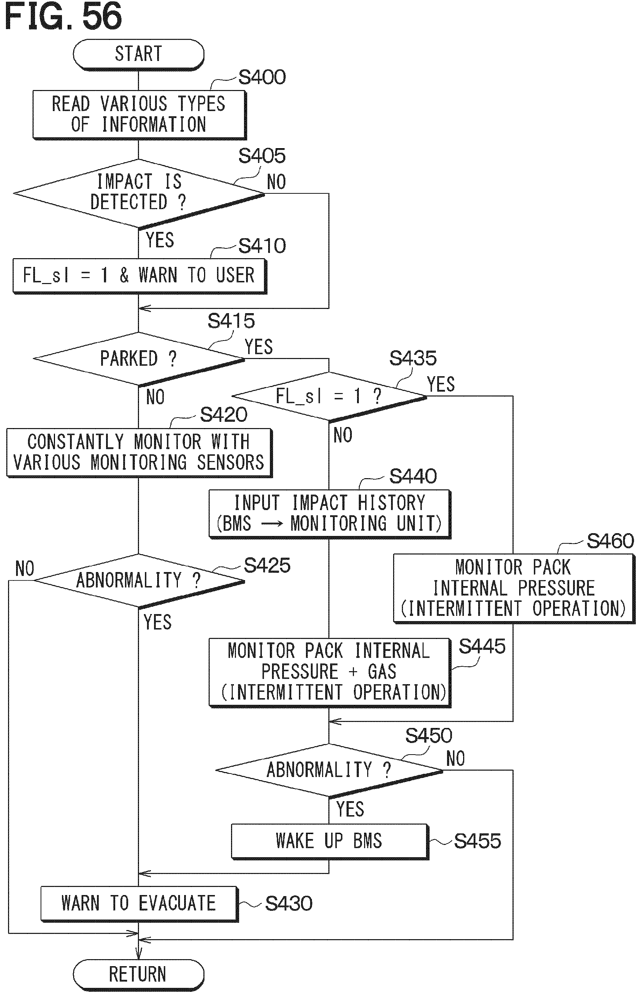

A fourth technical idea relates to a monitoring system 100 using the road surface interference sensor 10 described in the first to third technical ideas and a monitoring unit 110 including a monitoring sensor that monitors an in-vehicle device. Hereinafter, an embodiment of the fourth technical idea will be described with reference to FIGS. 55 and 56.

The monitoring system 100 includes the road surface interference sensor 10 described in any of the first to third technical ideas, the monitoring unit 110, and the battery management device BMS. Since the road surface interference sensor 10 is configured as described in any of the first to third technical ideas, the description of the road surface interference sensor 10 will be omitted.

The monitoring unit 110 monitors, among the in-vehicle device, a device located close to a floor panel. The monitoring unit 110 of the present example monitors a state of the power storage unit BU of the battery pack BP. That is, in the present example, the battery pack BP in which the battery cell C is a lithium ion battery is a device to be monitored by the monitoring unit 110.

The monitoring unit 110 includes a monitoring microcomputer 111, a voltage sensor 112, a current sensor 113, a battery temperature sensor 114, a pack internal pressure sensor 115, and a gas sensor 116. In the present example, the voltage sensor 112, the current sensor 113, the battery temperature sensor 114, the pack internal pressure sensor 115, and the gas sensor 116 form the monitoring sensor.

The monitoring microcomputer 111 is a control unit that controls operations of various monitoring sensors. The monitoring microcomputer 111 is connected to the battery management device BMS so as to communicate with the battery management device BMS. The monitoring microcomputer 111 controls the operation of the monitoring sensor according to a signal received from the battery management device BMS.

The voltage sensor 112 detects a block voltage of the assembled battery CS forming the power storage unit BU and a cell voltage of the battery cell C. The current sensor 113 detects a current flowing through the assembled battery CS forming the power storage unit BU. The battery temperature sensor 114 detects a temperature of the power storage unit BU. Sensor outputs of the voltage sensor 112, the current sensor 113, and the battery temperature sensor 114 are input to the battery management device BMS via the monitoring microcomputer 111.

The pack internal pressure sensor 115 detects, as pack internal pressure, pressure inside the accommodation case SC of the battery pack BP. The gas sensor 116 detects gas leaking from the power storage unit BU, for example, when the power storage unit BU is damaged. Sensor outputs of the pack internal pressure sensor 115 and the gas sensor 116 are input to the battery management device BMS via the monitoring microcomputer 111.

The monitoring unit 110 configured as described above receives a sensor output from the road surface interference sensor 10 via the battery management device BMS. The monitoring unit 110 of the present example controls the operations of various monitoring sensors according to the sensor output of the road surface interference sensor 10.

The battery management device BMS receives the sensor outputs from various monitoring sensors and the sensor output from the road surface interference sensor 10. The battery management device BMS monitors presence or absence of an abnormality in the power storage unit BU using the sensor outputs of various monitoring sensors and the sensor output from the road surface interference sensor 10. The battery management device BMS is configured to be able to constantly monitor the power storage unit BU when the vehicle V is in a ready-on state in which the vehicle V can travel. The battery management device BMS is basically configured to be in a sleep state when the vehicle V is in a ready-off state in which the vehicle V cannot travel. However, the battery management device BMS has a wake-up function of returning from the sleep state according to an input signal from an outside even in the ready-off state.

Next, an example of monitoring processing of the power storage unit BU in the monitoring system 100 will be described with reference to FIG. 56. The monitoring system 100 executes a control routine illustrated in FIG. 56 periodically or irregularly. Various types of processing included in the monitoring processing are executed by any one of the road surface interference sensor 10, the monitoring microcomputer 111, and the battery management device BMS, which form the monitoring system 100.

As illustrated in FIG. 56, the monitoring system 100 first reads various signals in step S400. The monitoring system 100 reads, for example, the sensor output of the road surface interference sensor 10 and the sensor output of the monitoring sensor included in the monitoring unit 110.

In step S405, the monitoring system 100 determines whether an external force due to road surface interference is detected as an impact. Specifically, one of the road surface interference sensor 10 and the monitoring unit 110 determines whether an external force is applied to the vehicle V by comparing the external force detected by the road surface interference sensor 10 with a predetermined threshold. The predetermined threshold is set to, for example, an external force that is assumed to have an effect on the power storage unit BU to be monitored by the monitoring unit 110.

When the result of the determination processing in step S405 indicates that an impact is detected, the monitoring system 100 proceeds to step S410, sets an impact flag FL_sl to "1", and issues a warning to a user using the HMI or the like. The impact flag FL_sl is a flag indicating that there is an impact at a level having an effect on the power storage unit BU with respect to the vehicle V, and an initial value thereof is set to "0".

On the other hand, when the result of the determination processing in step S405 indicates that no impact is detected, the monitoring system 100 skips step S410 and proceeds to the processing in step S415.

In step S415, the monitoring system 100 determines whether the vehicle V is parked. The monitoring system 100 determines whether the vehicle V is parked based on, for example, a ready-on state in which the vehicle V can travel and a ready-off state in which the vehicle V cannot travel. The determination of whether the vehicle V is parked may be performed based on, for example, a state of a parking brake.

When the vehicle V is not parked, the monitoring system 100 proceeds to step S420 and constantly monitors the power storage unit BU using various monitoring sensors. For example, the monitoring system 100 monitors presence or absence of an abnormality in charging and discharging based on the sensor outputs of the voltage sensor 112 and the current sensor 113. In addition, the monitoring system 100 monitors the presence or absence of an abnormality such as thermal runaway of the power storage unit BU based on the sensor outputs of the battery temperature sensor 114, the pack internal pressure sensor 115, and the gas sensor 116. The term "constant monitoring" as used herein is a concept including not only an operation of continuously capturing a signal from the monitoring sensor but also an operation of capturing a signal from the monitoring sensor at a predetermined short cycle.

Subsequently, in step S420, the monitoring system 100 determines whether an abnormality of the power storage unit BU is detected by constantly monitoring the power storage unit BU. Then, when the thermal runaway of the power storage unit BU is detected by constantly monitoring the power storage unit BU, the monitoring system 100 proceeds to step S430 and issues a warning to urge an occupant to evacuate from the vehicle V. For example, when an abnormality other than the thermal runaway is detected by constantly monitoring the power storage unit BU, the monitoring system 100 issues a warning to a driver or the like to urge repair or inspection.

On the other hand, when the vehicle V is parked, the monitoring system 100 proceeds to step S435 and determines whether the impact flag FL_sl is "1". In other words, the monitoring system 100 determines whether the road surface interference sensor 10 detects an impact at a level having some effect on the power storage unit BU.

When the impact flag FL_sl is "1", in step S440, in the monitoring system 100, the monitoring unit 110 receives, as an impact history, information indicating that an impact is detected from the battery management device BMS. The impact history may include, for example, not only the fact that an impact is detected, but also a time when the impact is detected, and a location where the impact occurs.

Subsequently, the monitoring system 100 executes monitoring enhancement processing in which monitoring of the power storage unit BU to be monitored is enhanced. In the present example, the monitoring system 100 executes, as the monitoring enhancement processing, processing of determining presence or absence of an abnormality in the power storage unit BU by increasing the number of types of monitoring sensors that monitor the power storage unit BU.

Specifically, in step S445, the monitoring system 100 executes processing of determining the presence or absence of an abnormality (for example, thermal runaway) in the power storage unit BU using sensor outputs of both the pack internal pressure sensor 115 and the gas sensor 116. In the processing, in order to reduce power consumption of the power storage unit BU, an intermittent operation is performed in which a sampling period of the sensor output is longer than that during the constant monitoring.

Subsequently, in step S450, the monitoring system 100 determines whether an abnormality of the power storage unit BU is detected by intermittently monitoring the power storage unit BU. When an abnormality of the power storage unit BU is detected by intermittently monitoring the power storage unit BU, the monitoring system 100 proceeds to step S455 and wakes up the battery management device BMS in a sleep state. Thereafter, in step S430, the monitoring system 100 issues a warning to urge an occupant to evacuate from the vehicle V. For example, when an abnormality other than the thermal runaway is detected by monitoring the power storage unit BU, the monitoring system 100 issues a warning to a driver or the like to urge repair or inspection.

On the other hand, when the impact flag FL_sl is "0", the monitoring system 100 proceeds to step S460. In step S460, the monitoring system 100 executes processing in which a monitoring level of the power storage unit BU decreases compared to when the impact flag FL_sl is "1". In the present example, the monitoring system 100 executes processing of determining the presence or absence of an abnormality in the power storage unit BU by reducing the number of types of monitoring sensors that monitor the power storage unit BU.

Specifically, the monitoring system 100 executes processing of determining presence or absence of an abnormality (for example, thermal runaway) in the power storage unit BU using the sensor output of the pack internal pressure sensor 115 among the pack internal pressure sensor 115 and the gas sensor 116. In the processing, in order to reduce power consumption of the power storage unit BU, an intermittent operation is performed in which a sampling period of the sensor output is longer than that during the constant monitoring.

Subsequently, in step S450, the monitoring system 100 determines whether an abnormality of the power storage unit BU is detected by intermittently monitoring the power storage unit BU. When an abnormality of the power storage unit BU is detected by intermittently monitoring the power storage unit BU, the monitoring system 100 proceeds to step S455 and wakes up the battery management device BMS in a sleep state. Thereafter, in step S430, the monitoring system 100 issues a warning to urge an occupant to evacuate from the vehicle V. For example, when an abnormality other than the thermal runaway is detected by monitoring the power storage unit BU, the monitoring system 100 issues a warning to a driver or the like to urge repair or inspection.

The monitoring system 100 described above includes the road surface interference sensor 10 according to any one of the first to third technical ideas, and the monitoring unit 110 including the monitoring sensor that monitors presence or absence of an abnormality in an in-vehicle device. The monitoring unit 110 receives the sensor output from the road surface interference sensor 10 and controls the operation of the monitoring sensor according to the sensor output.

As described above, with the configuration in which the sensor output of the road surface interference sensor 10 is input to the monitoring unit 110, the abnormality in the in-vehicle device can be determined by associating the impact on the vehicle V with the monitoring result of the in-vehicle device, and thus the detection accuracy of the abnormality in the in-vehicle device can be improved. In addition, since the configuration is such that the operation of the monitoring sensor can be changed using the sensor output of the road surface interference sensor 10 as a trigger, it is expected that unnecessary operation of the monitoring sensor can be reduced, thereby achieving power saving.

The monitoring system 100 of the present example has the following features.
(1) In the monitoring system 100, one of the road surface interference sensor 10 and the monitoring unit 110 determines whether an impact is applied to the vehicle V by comparing the external force detected by the road surface interference sensor 10 with a predetermined threshold. According to this, the impact on the vehicle V due to a physical factor such as road surface interference can be detected. Accordingly, the abnormality in the in-vehicle device can be determined by associating the impact on the vehicle V and the monitoring result of the in-vehicle device.
(2) Specifically, when it is detected that an impact is applied to the vehicle V based on the sensor output of the road surface interference sensor 10, the monitoring system 100 executes the monitoring enhancement processing of enhancing monitoring of the in-vehicle device to be monitored. According to this, the abnormality in the in-vehicle device caused by the external force can be appropriately detected while reducing the burden of monitoring the in-vehicle device.
(3) The power storage unit BU, which is one of the in-vehicle devices, monitors a voltage, a current, a temperature, and the like when the vehicle V is in the ready-on state, but when the vehicle V is in the ready-off state, a frequency of monitoring may be reduced in order to reduce the power consumption of the power storage unit BU.
   On the other hand, the abnormality in the power storage unit BU caused by the impact applied to the vehicle V may occur immediately after the impact is applied, or may occur after a certain amount of time elapses since the impact is applied. Therefore, for example, when the vehicle V is brought into the ready-off state after being subjected to the impact while the vehicle V is traveling, there is a possibility that the abnormality in the power storage unit BU cannot be appropriately detected.
   In consideration of these, the monitoring system 100 of the present disclosure is configured to execute the monitoring enhancement processing when the road surface interference sensor 10 detects that an external force is applied to the vehicle V and the vehicle V is in a ready-off state. According to this, an abnormality such as thermal runaway in the power storage unit BU can be appropriately detected while reducing the power consumption of the power storage unit BU in the ready-off state.
(4) For example, when the battery pack BP and the power storage unit BU are damaged due to an impact applied to the vehicle V, thermal runaway of the power storage unit BU may occur. In an initial stage of the thermal runaway, there is a tendency for a pressure change inside the battery pack BP and gas leakage from the battery cell C to occur more easily than for the voltage and temperature of the power storage unit BU. When the accommodation case SC of the battery pack BP is damaged and the airtightness is impaired, the internal pressure of the accommodation case SC becomes the atmospheric pressure, and it may be difficult to detect the thermal runaway of the power storage unit BU only by the pressure change inside the battery pack BP.
   In consideration of these, in the monitoring system 100 of the present example, when an impact is detected, the presence or absence of an abnormality (for example, thermal runaway) in the power storage unit BU is determined using the sensor outputs of both the pack internal pressure sensor 115 and the gas sensor 116. This is advantageous in that the thermal runaway of the power storage unit BU can be easily detected at an early stage.
   In particular, in the present example, the sensor outputs of both the pack internal pressure sensor 115 and the gas sensor 116 are used to detect the thermal runaway of the power storage unit BU. Therefore, even if the accommodation case SC of the battery pack BP is damaged and the thermal runaway of the power storage unit BU cannot be detected by the sensor output of the pack internal pressure sensor 115, the thermal runaway of the power storage unit BU can be appropriately detected based on the sensor output of the gas sensor 116.
(5) It is preferable that when the abnormality in the power storage unit BU is detected while the vehicle V is in a ready-off state, the monitoring system 100 is configured to externally notify information prompting inspection of the power storage unit BU when switching from the ready-off state to the ready-on state. In this manner, even if the abnormality occurs in the power storage unit BU when the vehicle V is in a ready-off state due to the impact applied while the vehicle V is traveling, the abnormality can be notified the next time the vehicle V is used. Accordingly, the vehicle V can be prevented from being used in a state where there is an abnormality in the power storage unit BU.

### [Modification of System Configuration]

The monitoring system 100 is not limited to that described in the above embodiment. The monitoring system 100 can be variously modified as follows, for example.

### [First Modification]

In the monitoring system 100, the battery management device BMS and the monitoring unit 110 are separately provided, but the present disclosure is not limited thereto, and for example, the battery management device BMS and the monitoring unit 110 may be provided by a common microcomputer.

### [Second Modification]

As monitoring sensors, the monitoring microcomputer 111, the voltage sensor 112, the current sensor 113, the battery temperature sensor 114, the pack internal pressure sensor 115, and the gas sensor 116 are illustrated, these are merely examples, and the monitoring unit 110 may be implemented by a monitoring sensor different from the above.

### [Third Modification]

The monitoring system 100 may determine whether an impact is applied to the vehicle V by comparing an external force detected by the road surface interference sensor 10 with a predetermined threshold using a device other than the road surface interference sensor 10 and the monitoring unit 110.

### [Fourth Modification]

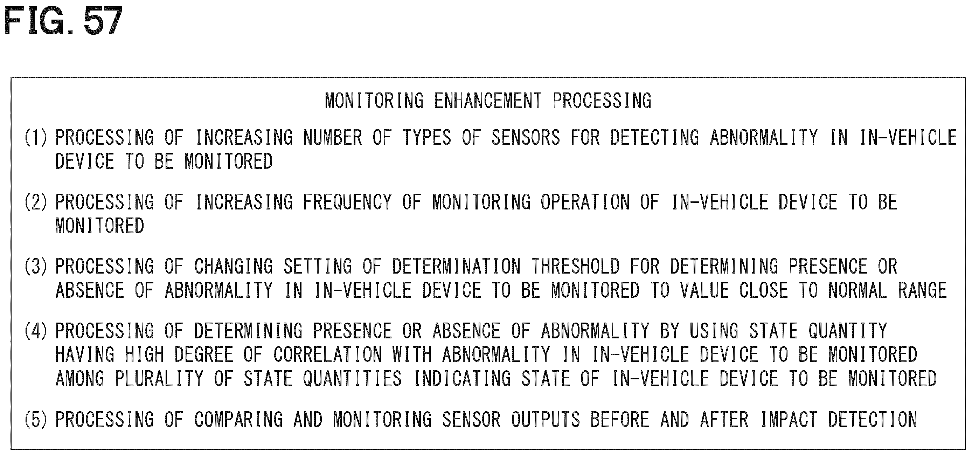

The monitoring enhancement processing is not limited to the determination processing of the abnormality in the power storage unit BU using the sensor outputs of both the pack internal pressure sensor 115 and the gas sensor 116. As the monitoring enhancement processing, for example, any one of processing (1) to (5) illustrated in FIG. 57 may be executed.

Processing described in (1) is processing of increasing the number of types of sensors for detecting an abnormality in an in-vehicle device to be monitored.

Processing described in (2) is processing of increasing a frequency of a monitoring operation of an in-vehicle device to be monitored.

Processing described in (3) is processing of changing a setting of a determination threshold for determining whether there is an abnormality in an in-vehicle device to be monitored to a value close to a normal range.

Processing described in (4) is processing of determining presence or absence of an abnormality by using a state quantity having a high degree of correlation with an abnormality in an in-vehicle device to be monitored among a plurality of state quantities indicating a state of the in-vehicle device to be monitored.

Processing described in (5) is processing of comparing and monitoring sensor outputs before and after impact detection. By comparing and monitoring the sensor outputs before and after the impact detection, for example, a change in state of the in-vehicle device with respect to before the impact detection can be monitored.

### [Fifth Modification]

The monitoring system 100 is configured to execute the monitoring enhancement processing when the road surface interference sensor 10 detects that an external force is applied to the vehicle V and the vehicle V is in a ready-off state, but this is not essential.

### [Sixth Modification]

The monitoring system 100 includes the road surface interference sensor 10 described in the first to third technical ideas, but may include an impact sensor (for example, an acceleration sensor) other than the road surface interference sensor 10.

### [Seventh Modification]

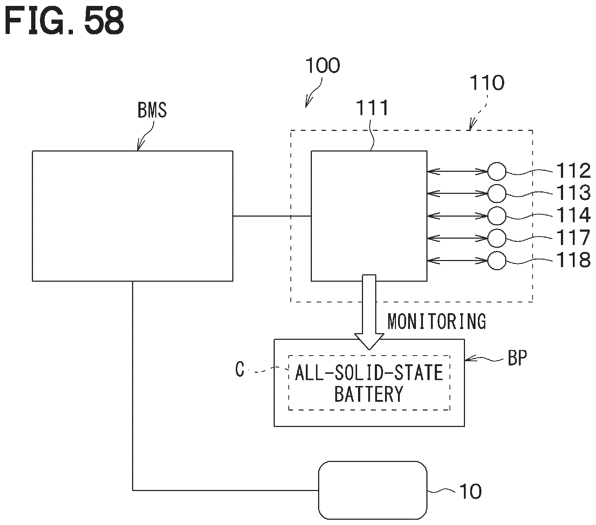

A device to be monitored by the monitoring system 100 is not limited to the battery pack BP in which the battery cell C is a lithium ion battery. In the monitoring system 100, for example, as illustrated in FIG. 58, the monitoring unit 110 may monitor the battery pack BP in which the battery cell C is an all-solid-state battery.

The all-solid-state battery is a battery in which an electrolyte is formed of a solid, and is less likely to cause a failure due to a temperature change of the battery than a lithium ion battery or the like. On the other hand, a sulfide-based all-solid-state battery may react with water to generate hydrogen sulfide. Therefore, it is preferable that when the battery cell C is an all-solid-state battery, the monitoring unit 110 includes a humidity sensor 117 that detects humidity around the battery cell C and a hydrogen sulfide sensor 118 that detects hydrogen sulfide. The monitoring unit 110 may be provided with a water sensor that detects moisture around the battery cell C instead of the humidity sensor 117.

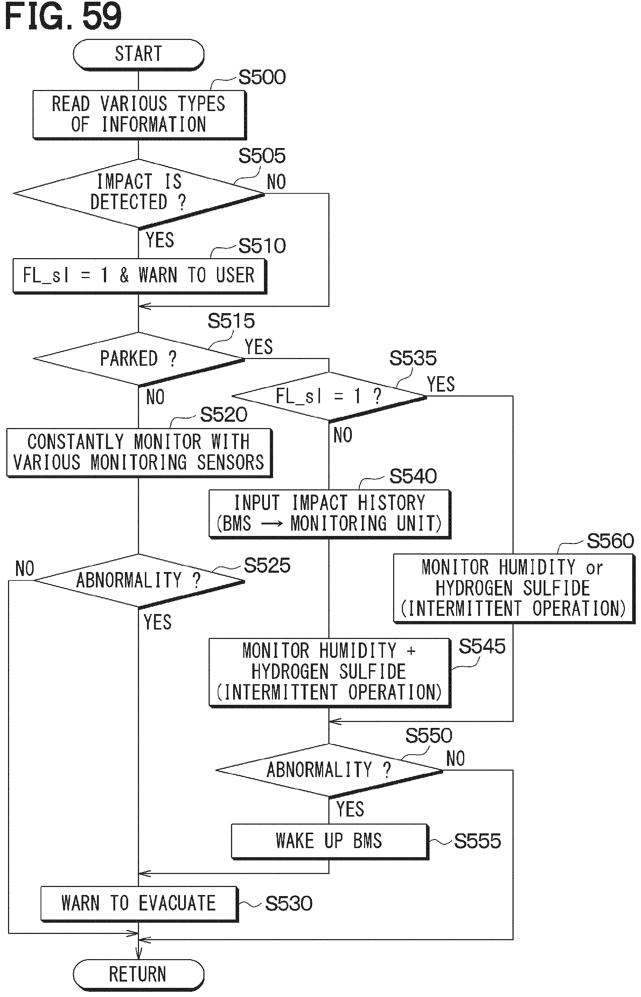

Hereinafter, an example of processing of monitoring the all-solid-state battery in the monitoring system 100 will be described with reference to FIG. 59. Since each processing in steps S500 to S535 illustrated in FIG. 59 is substantially the same as each processing in steps S400 to S435 illustrated in FIG. 56, the description thereof will be omitted.

When the determination result in step S535 is "FL_sl = 1", in the monitoring system 100, in step S540, the monitoring unit 110 receives, as an impact history, information indicating that an impact is detected from the battery management device BMS. Then, the monitoring system 100 executes monitoring enhancement processing of enhancing monitoring of an all-solid-state battery to be monitored. In the present example, in step S545, the monitoring system 100 executes processing of determining presence or absence of an abnormality in the all-solid-state battery using sensor outputs of both the humidity sensor 117 and the hydrogen sulfide sensor 118. In the processing, in order to reduce power consumption of the all-solid-state battery, an intermittent operation is performed in which a sampling period of the sensor output is longer than that during the constant monitoring. Thereafter, in step S550, the monitoring system 100 determines whether an abnormality in the all-solid-state battery is detected by intermittently monitoring the all-solid-state battery, and when an abnormality in the all-solid-state battery is detected, the processing proceeds to step S555. In step S555, the battery management device BMS in a sleep state is woken up.

When the determination result in step S535 is "FL_sl = 0", the monitoring system 100 proceeds to step S560. In step S560, the monitoring system 100 executes processing in which a monitoring level of the all-solid-state battery decreases as compared with the case where the impact flag FL_sl is "1". In the present example, the monitoring system 100 executes processing of determining presence or absence of an abnormality (for example, thermal runaway) of the all-solid-state battery using the sensor output of one of the humidity sensor 117 and the hydrogen sulfide sensor 118. In the processing, in order to reduce power consumption of the all-solid-state battery, an intermittent operation is performed in which a sampling period of the sensor output is longer than that during the constant monitoring. Thereafter, in step S550, the monitoring system 100 determines whether an abnormality in the all-solid-state battery is detected by intermittently monitoring the all-solid-state battery, and when an abnormality in the all-solid-state battery is detected, the processing proceeds to step S555. In step S555, the battery management device BMS in a sleep state is woken up.

As described above, it is preferable that the monitoring enhancement processing is set according to properties of the battery cell C to be monitored. The above description is an example, and the monitoring enhancement processing may be different from the above description.

### [Other Embodiments]

In the embodiments described above, it is needless to say that the elements forming the embodiments are not necessarily essential except in a case where those elements are clearly indicated to be essential in particular, a case where those elements are considered to be obviously essential in principle, and the like.

In the embodiments described above, when referring to the number, the numerical value, the amount, the range, and the like of the components of the embodiment, the present disclosure is not limited to a specific number of components of the embodiments, except in a case of being particularly noted as being essential, a case of being limited to a specific number in principle, and the like.

In the embodiments described above, when referring to the shape, the positional relationship, and the like of the component and the like, the present disclosure is not limited to the shape, the positional relationship, and the like, except in a case of being particularly noted, a case of being limited to a specific shape, a specific positional relationship in principle, and the like.

The control unit and the method therefor of the present disclosure may be realized by a dedicated computer provided by including a processor and a memory that are programmed to execute one or more functions embodied by a computer program. The control unit and the method therefor of the present disclosure may be realized by a dedicated computer provided by including a processor with one or more dedicated hardware logic circuits. The control unit and the method therefor of the present disclosure may be realized by one or more dedicated computers, each including a combination of a processor and a memory that are programmed to execute one or more functions and a processor formed of one or more hardware logic circuits. The computer program may be stored in a computer-readable non-transient tangible storage medium, as an instruction executed by a computer.

### [Aspects of Plurality of Technical Ideas]

### [First Technical Idea]

The first technical idea has a plurality of aspects described below.

### [First Aspect]

A road surface interference sensor including:
a detection unit (21) located below a floor panel (FP) of a vehicle (V) and configured to detect an external force applied to the vehicle from a side of a road surface (RS), in which
the detection unit includes a hollow insulator (22) and a plurality of electrode lines (23, 24, 26, 27) provided to an inner surface (22a) of the insulator, and
the detection unit is configured to detect the external force based on presence or absence of contact between the electrode lines.

### [Second Aspect]

The road surface interference sensor according to First Aspect, in which
the detection unit includes an outer layer member (25) that covers the insulator, and
the outer layer member is formed of an elastic member having rigidity higher than rigidity of the insulator.

### [Third Aspect]

The road surface interference sensor according to First Aspect, further including:
a plate-shaped protector portion (281) located on the side of the road surface with respect to the floor panel; and
a displacement unit (282) configured to displace the protector portion in a direction to approach the floor panel when external force is applied to the protector portion, in which
the protector portion has rigidity higher than rigidity of the insulator,
the protector portion has a larger overlapping area with the road surface than an overlapping area with the road surface of the detection unit, and
the detection unit is located between the protector portion and the floor panel and is configured to be pressed by the protector portion when the protector portion is displaced by external force in the direction to approach the floor panel.

### [Fourth Aspect]

The road surface interference sensor according to Third Aspect, in which
the displacement unit is formed of a deformation member (282) that has rigidity lower than rigidity of the protector portion and is configured to be deformed when external force is applied.

### [Fifth Aspect]

The road surface interference sensor according to Fourth Aspect, in which
the deformation member is a spring portion (283) that includes a thin portion (283a) having a thickness smaller than a thickness of the protector portion, and
the deformation member is configured to deform in the direction approaching the floor panel by bending from the thin portion as a starting point.

### [Sixth Aspect]

The road surface interference sensor according to Fourth Aspect, in which
the deformation member is a cushion portion (285) having rigidity lower than rigidity of the protector portion.

### [Seventh Aspect]

The road surface interference sensor according to any one of First Aspect to Sixth Aspect, in which
the electrode lines are spirally located in a longitudinal direction of the insulator along the inner surface of the insulator without being in electrical contact with each other.

### [Eighth Aspect]

The road surface interference sensor according to any one of First Aspect to Seventh Aspect, further including:
a signal output unit (53) configured to output a signal according to presence or absence of contact between the electrode lines, in which
a series connection body (SCB), in which a plurality of the detection units are electrically connected in series, is connected to the signal output unit.

### [Ninth Aspect]

The road surface interference sensor according to Eighth Aspect, in which
in the detection unit, at least two of the electrode lines are connected via an electrical resistor (R).

### [Tenth Aspect]

The road surface interference sensor according to Ninth Aspect, further including:
an identification unit (52) configured to identify one of the detection units that has detected external force, in which
an electrical resistance value of the electrical resistor in at least a part of the detection units is different from an electrical resistance value of the electrical resistor in other detection units, and
the identification unit is configured to identify, based on an output from the series connection body, one of the detection units that has detected external force.

### [Eleventh Aspect]

The road surface interference sensor according to any one of First Aspect to Tenth Aspect, further including:
a determination unit (51) configured to determine presence or absence of road surface interference; and
a physical quantity detection unit (GS) installed on the vehicle separately from the detection unit and configured to detect a physical quantity that changes due to the road surface interference, in which
the determination unit is configured to determine presence or absence of the road surface interference based on an output of the detection unit and an output of the physical quantity detection unit.

### [Twelfth Aspect]

The road surface interference sensor according to any one of First Aspect to Eleventh Aspect, in which
a signal according to external force applied to the vehicle is output to an outside via a communication network of the vehicle.

### [Thirteenth Aspect]

The road surface interference sensor according to any one of First Aspect to Twelfth Aspect, in which
a cushioning member (CP) is located between the road surface and an underfloor device installed below the floor panel, and
at least a portion of the detection unit is embedded in the cushioning member.

### [Fourteenth Aspect]

The road surface interference sensor according to Thirteenth Aspect, in which
the underfloor device is a power storage unit (BU) including a plurality of battery cells (C).

### [Fifteenth Aspect]

The road surface interference sensor according to Fourteenth Aspect, in which
the detection unit is located such that at least a portion of the detection unit overlaps two or more of the battery cells in an up-down direction.

### [Sixteenth Aspect]

A monitoring system including:
the road surface interference sensor (10) according to any one of First aspect to Fifteenth Aspect; and
a monitoring unit (110) including at least one monitoring sensor (112, 113, 114, 115, and 116) configured to monitor presence or absence of an abnormality in an in-vehicle device (BP), in which
the monitoring unit is configured to receive a sensor output from the road surface interference sensor and control an operation of the monitoring sensor according to the sensor output.

### [Seventeenth Aspect]

The monitoring system according to Sixteenth Aspect, in which
one of the road surface interference sensor and the monitoring unit is configured to compare external force detected by the road surface interference sensor with a predetermined threshold to determine whether an impact is applied to the vehicle.

### [Second Technical Idea]

The second technical idea has a plurality of aspects described below.

### [First Aspect]

A road surface interference sensor including:
a detection unit (31) located under a floor panel (FP) of a vehicle (V) and configured to detect an external force applied to the vehicle from a side of a road surface (RS), in which
the detection unit includes a flexible hollow tube (32) and pressure sensors (33 and 34) that detect pressure inside the tube, and
a liquid as a pressure transmission medium is sealed inside the tube.

As described in **Patent Literature** 1, when detecting, as the external force, the pressure change of air inside the tube due to the deformation of the tube, if the deformation of the tube is localized, the pressure change of air is small, and it is difficult to appropriately detect the impact.

On the other hand, if a non-compressible liquid is sealed inside the tube, an amount of air inside the tube is reduced, and thus even if deformation of the tube is localized, the external force applied to the vehicle from the side of the road surface can be appropriately detected.

### [Second Aspect]

The road surface interference sensor according to First Aspect, in which
the liquid is an insulating fluid.

### [Third Aspect]

The road surface interference sensor according to First or Second Aspect, in which
the pressure sensor is a hydraulic pressure sensor having resistance to the liquid.

### [Fourth Aspect]

The road surface interference sensor according to any one of First to Third Aspects, further including:
a determination unit (61) configured to determine presence or absence of road surface interference, in which
a physical quantity detection unit (GS) that detects a physical quantity changing due to the road surface interference is installed on the vehicle separately from the detection unit, and
the determination unit determines presence or absence of the road surface interference based on an output of the detection unit and an output of the physical quantity detection unit.

### [Fifth Aspect]

The road surface interference sensor according to any one of First to Fourth Aspects, in which
a signal according to the external force applied to the vehicle is output to an outside via a communication network of the vehicle.

### [Sixth Aspect]

The road surface interference sensor according to any one of First to Fifth Aspects, in which
a cushioning member (CP) is located between the road surface and an underfloor device installed below the floor panel, and
at least a portion of the detection unit is embedded in the cushioning member.

### [Seventh Aspect]

The road surface interference sensor according to Sixth Aspect, in which
the underfloor device is a power storage unit (BU) including a plurality of battery cells (C).

### [Eighth Aspect]

The road surface interference sensor according to Seventh Aspect, in which
the detection unit is located such that at least a portion of the detection unit overlaps two or more of the battery cells in an up-down direction.

### [Third Technical Idea]

The third technical idea has a plurality of aspects described below.

### [First Aspect]

A road surface interference sensor including:
a detection unit (41) located below a floor panel (FP) of a vehicle (V) and configured to detect an external force applied to the vehicle from a side of a road surface (RS), in which
the detection unit includes a sheet-shaped contact switch (42) including a first electrode sheet (413) and a second electrode sheet (414) located to face the first electrode sheet with a predetermined gap therebetween, and detects the external force based on presence or absence of contact between the first electrode sheet and the second electrode sheet.

As described in **Patent Literature** 1, when detecting, as an external force, the pressure change of air inside the tube due to the deformation of the tube, if the deformation of the tube is localized, the pressure change of air is small, and it is difficult to appropriately detect the impact.

On the other hand, when detecting the external force based on the presence or absence of the contact between the electrode sheets, the external force applied to the vehicle from the side of the road surface can be appropriately detected even when the external force is locally applied. In addition, if the detection unit is configured to include the sheet-shaped contact switch, there is an advantage that the detection unit can be easily located in a limited space below the floor panel.

### [Second Aspect]

The road surface interference sensor according to First Aspect, in which
when a direction in which the first electrode sheet and the second electrode sheet face each other is defined as an electrode facing direction, the detection unit is located between the road surface and an underfloor device installed below the floor panel in a posture in which the electrode facing direction intersects a lower surface of the underfloor device.

### [Third Aspect]

The road surface interference sensor according to Second Aspect, in which
a cushioning member (CP) is located between the underfloor device and the road surface, and
at least a portion of the detection unit is embedded in the cushioning member.

### [Fourth Aspect]

The road surface interference sensor according to any one of First to Third Aspects, further including:
a determination unit (71) configured to determine presence or absence of road surface interference, in which
a physical quantity detection unit (GS) configured to detect a physical quantity that changes due to the road surface interference is installed on the vehicle separately from the detection unit, and
the determination unit determines presence or absence of the road surface interference based on an output of the detection unit and an output of the physical quantity detection unit.

### [Fifth Aspect]

The road surface interference sensor according to any one of First to Fourth Aspects, in which
a signal according to the external force applied to the vehicle is output to an outside via a communication network of the vehicle.

### [Sixth Aspect]

The road surface interference sensor according to Second or Third Aspect, in which
the underfloor device is a power storage unit (BU) including a plurality of battery cells (C).

### [Seventh Aspect]

The road surface interference sensor according to Sixth Aspect, in which
the detection unit is located such that at least a portion of the detection unit overlaps two or more of the battery cells in an up-down direction.

## Claims

1. A road surface interference sensor comprising:
a detection unit (21) located below a floor panel (FP) of a vehicle (V) and configured to detect an external force applied to the vehicle from a side of a road surface (RS), wherein
the detection unit includes a hollow insulator (22) and a plurality of electrode lines (23, 24, 26, 27) provided to an inner surface (22a) of the insulator, and
the detection unit is configured to detect the external force based on presence or absence of contact between the electrode lines.

2. The road surface interference sensor according to claim 1, wherein
the detection unit includes an outer layer member (25) that covers the insulator, and
the outer layer member is formed of an elastic member having rigidity higher than rigidity of the insulator.

3. The road surface interference sensor according to claim 1, further comprising:
a plate-shaped protector portion (281) located on the side of the road surface with respect to the floor panel; and
a displacement unit (282) configured to displace the protector portion in a direction to approach the floor panel when external force is applied to the protector portion, wherein
the protector portion has rigidity higher than rigidity of the insulator,
the protector portion has a larger overlapping area with the road surface than an overlapping area with the road surface of the detection unit, and
the detection unit is located between the protector portion and the floor panel and is configured to be pressed by the protector portion when the protector portion is displaced by external force in the direction to approach the floor panel.

4. The road surface interference sensor according to claim 3, wherein
the displacement unit is formed of a deformation member (282) that has rigidity lower than rigidity of the protector portion and is configured to be deformed when external force is applied.

5. The road surface interference sensor according to claim 4, wherein
the deformation member is a spring portion (283) that includes a thin portion (283a) having a thickness smaller than a thickness of the protector portion, and
the deformation member is configured to deform in the direction approaching the floor panel by bending from the thin portion as a starting point.

6. The road surface interference sensor according to claim 4, wherein
the deformation member is a cushion portion (285) having rigidity lower than rigidity of the protector portion.

7. The road surface interference sensor according to any one of claims 1 to 3, wherein
the electrode lines are spirally located in a longitudinal direction of the insulator along the inner surface of the insulator without being in electrical contact with each other.

8. The road surface interference sensor according to any one of claims 1 to 3, further comprising:
a signal output unit (53) configured to output a signal according to presence or absence of contact between the electrode lines, wherein
a series connection body (SCB), in which a plurality of the detection units are electrically connected in series, is connected to the signal output unit.

9. The road surface interference sensor according to claim 8, wherein
in the detection unit, at least two of the electrode lines are connected via an electrical resistor (R).

10. The road surface interference sensor according to claim 9, further comprising:
an identification unit (52) configured to identify one of the detection units that has detected external force, wherein
an electrical resistance value of the electrical resistor in at least a part of the detection units is different from an electrical resistance value of the electrical resistor in other detection units, and
the identification unit is configured to identify, based on an output from the series connection body, one of the detection units that has detected external force.

11. The road surface interference sensor according to any one of claims 1 to 3, further comprising:
a determination unit (51) configured to determine presence or absence of road surface interference; and
a physical quantity detection unit (GS) installed on the vehicle separately from the detection unit and configured to detect a physical quantity that changes due to the road surface interference, wherein
the determination unit is configured to determine presence or absence of the road surface interference based on an output of the detection unit and an output of the physical quantity detection unit.

12. The road surface interference sensor according to any one of claims 1 to 3, wherein
a signal according to external force applied to the vehicle is output to an outside via a communication network of the vehicle.

13. The road surface interference sensor according to any one of claims 1 to 3, wherein
a cushioning member (CP) is located between the road surface and an underfloor device installed below the floor panel, and
at least a portion of the detection unit is embedded in the cushioning member.

14. The road surface interference sensor according to claim 13, wherein
the underfloor device is a power storage unit (BU) including a plurality of battery cells (C).

15. The road surface interference sensor according to claim 14, wherein
the detection unit is located such that at least a portion of the detection unit overlaps two or more of the battery cells in an up-down direction.

16. A monitoring system comprising:
the road surface interference sensor (10) according to any one of claims 1 to 3; and
a monitoring unit (110) including at least one monitoring sensor (112, 113, 114, 115, 116) configured to monitor presence or absence of an abnormality in an in-vehicle device (BP), wherein
the monitoring unit is configured to receive a sensor output from the road surface interference sensor and control an operation of the monitoring sensor according to the sensor output.

17. The monitoring system according to claim 16, wherein
one of the road surface interference sensor and the monitoring unit is configured to compare external force detected by the road surface interference sensor with a predetermined threshold to determine whether an impact is applied to the vehicle.
